# EUROPEAN PATENT SPECIFICATION

(11) **EP 4 060 592 B1**
(45) Date of publication and mention of the grant of the patent: **09.12.2026**
(21) Application number: 20900020.7
(22) Date of filing: 27.10.2020
(51) Int. Cl.: G06Q 30/02, G06F 16/957

(54) **METHOD AND SYSTEM FOR ACQUIRING CONTENT, USER TERMINAL, AND CONTENT SERVER**
VERFAHREN UND SYSTEM ZUR INHALTSERFASSUNG, BENUTZERENDGERÄT UND INHALTSSERVER
PROCÉDÉ ET SYSTÈME D'ACQUISITION DE CONTENU, TERMINAL UTILISATEUR ET SERVEUR DE CONTENU

(30) Priority: 12.12.2019 CN 201911274296
(43) Date of publication of application: 21.09.2022
(73) Proprietor: Petal Cloud Technology Co., Ltd., Dongguan, Guangdong 523799 (CN)
(72) Inventor: HE, Yiliang, Shenzhen, Guangdong 518129 (CN)
(74) Representative: Pfenning, Meinig & Partner mbB
(86) International application number: PCT/CN2020/124159
(87) International publication number: WO 2021/114919

(56) References cited:
- EP-A1- 3 525 418
- CN-A- 105 095 227
- CN-A- 107 315 526
- CN-A- 109 840 782
- US-A1- 2018 218 389
- US-A1- 2019 130 296
- US-A1- 2019 228 105

## Description

### TECHNICAL FIELD

This application belongs to the field of terminal technologies, and in particular, relates to a content obtaining method, a user terminal, and a computer-readable storage medium.

### BACKGROUND

With continuous development of terminal technologies, a user increasingly obtains content by using a user terminal. To be specific, the user terminal continuously sends content obtaining requests to a content server, and the content server continuously returns corresponding content to the user terminal based on the content obtaining requests sent by the user terminal.

To optimize user experience, a conventional user terminal usually requests a plurality of pieces of content in one content obtaining request, and continues to send a next content obtaining request when there is still undisplayed content. A content obtaining speed can be increased in this manner of requesting a plurality of pieces of content at a time and requesting content in advance. However, because the content server has not received an exposure event of the undisplayed content when receiving the next content obtaining request, the content server determines that the undisplayed content is not exposed, and re-pushes the undisplayed content. However, when the undisplayed content is re-pushed, the undisplayed content may have been exposed or is about to be exposed, thereby causing repeated exposure of content on the user terminal, and degrading user experience.

US 2018/218389 A1 discloses a method for collecting and applying visibility statistics in online advertising. Ad block visibility data relating to initial visibility characteristics and subsequent visibility characteristics of ad blocks on webpages are collected from a sample of browser sessions and aggregated to provide a representative historical view of ad block visibility characteristics on those webpages. The collected visibility data are used to build a predictive model of ad block visibility characteristics for future sessions. Ad selection can be based on the predicted visibility characteristics for ad blocks on a webpage as rendered on a particular requesting client device.

### SUMMARY

The invention is set out in the appended set of claims. Embodiments of this application provide a content obtaining method, a content obtaining system, a user terminal, and a content server, to resolve a problem of repeated exposure of content during conventional content obtaining.

According to a first aspect, an embodiment of this application provides a content obtaining method, applied to a user terminal. The content obtaining method includes:
obtaining user behavior data corresponding to the user terminal and to-be-displayed content on the user terminal;
determining an exposure probability of the to-be-displayed content based on the user behavior data;
sending the exposure probability to a content server; and
receiving target content fed back by the content server, where the target content is determined based on the exposure probability, and the target content is triggered by the content server after the content server receives a content obtaining request sent by the user terminal.

It should be noted that the to-be-displayed content on the user terminal is content that is returned by the content server to the user terminal in response to a content obtaining request of the user terminal but has not been displayed on a display screen of the user terminal. The user behavior data includes but is not limited to browsing behavior data and operation behavior data. The browsing behavior data includes but is not limited to a browsing time, browsing duration, and other data. The operation behavior data includes but is not limited to data corresponding to a swipe-up scrolling behavior, data corresponding to a swipe-down refreshing behavior, and the like.

In a possible implementation of the first aspect, before the determining an exposure probability of the to-be-displayed content based on the user behavior data, the method includes:
obtaining historical user behavior data corresponding to the user terminal; and
determining, based on the historical user behavior data, first browsing duration corresponding to the user terminal in each preset time period.

It should be understood that the historical user behavior data includes historical browsing behavior data of content browsing performed by a user on the user terminal, and the historical browsing behavior data may include a historical browsing time, historical browsing duration, and the like. Herein, the historical browsing behavior data may be browsing behavior data of the user on the user terminal in the last week, month, or year.

Herein, the preset time period may be determined based on a specific case. For example, based on the historical browsing time, 0:00 to 7:00 may be determined as a first preset time period, 7:00 to 12:00 may be determined as a second preset time period, 12:00 to 18:00 may be determined as a third preset time period, and 18:00 to 24:00 may be determined as a fourth preset time period. The first browsing duration may be determined based on historical browsing duration corresponding to each preset time period. For example, average browsing duration of historical browsing duration corresponding to each preset time period may be determined as first browsing duration corresponding to the preset time period. Alternatively, a weight may be set for historical browsing duration based on an interval between a current moment and a historical browsing time corresponding to each historical browsing behavior, and then weighted summation may be performed on historical browsing duration corresponding to each preset time period to obtain first browsing duration corresponding to the preset time period.

Optionally, the user behavior data includes a current browsing time and second browsing duration, and the determining an exposure probability of the to-be-displayed content based on the user behavior data includes:
determining, based on the current browsing time, a target time period to which the user terminal currently belongs, where the target time period is any one of the preset time periods; and
determining the exposure probability of the to-be-displayed content based on the second browsing duration and first browsing duration corresponding to the target time period.

Specifically, the determining the exposure probability of the to-be-displayed content based on the second browsing duration and first browsing duration corresponding to the target time period includes:
determining, based on the current browsing time and the second browsing duration, an initial browsing time corresponding to the user terminal and a preset browsing time corresponding to the to-be-displayed content; and
determining the exposure probability of the to-be-displayed content based on the initial browsing time, the preset browsing time, and the first browsing duration corresponding to the target time period.

For example, average browsing duration corresponding to content may be determined based on the second browsing duration and a quantity of browsed content corresponding to the second browsing duration. In addition, the preset browsing time corresponding to the to-be-displayed content may be predicted based on a quantity of content existing before the to-be-displayed content, the average browsing duration, and the initial browsing time.

It should be understood that duration required for displaying the to-be-displayed content on the user terminal may be calculated based on the preset browsing time and the initial browsing time, and the exposure probability of the to-be-displayed content may be determined based on a magnitude relationship between the required duration and the first browsing duration corresponding to the target time period. If the required duration is more less than the first browsing duration corresponding to the target time period, it is determined that the exposure probability of the to-be-displayed content is higher. If the required duration is more greater than the first preset duration corresponding to the target time period, it is determined that the exposure probability of the to-be-displayed content is lower.

In a possible implementation of the first aspect, the user behavior data includes operation behavior data, and the determining an exposure probability of the to-be-displayed content based on the user behavior data includes:
determining an operation mode corresponding to the operation behavior data and a display mode corresponding to the to-be-displayed content; and
determining the exposure probability of the to-be-displayed content based on the operation mode and the display mode.

It should be noted that the display mode corresponding to the to-be-displayed content is a mode in which content is displayed on the user terminal, and the display mode is a swipe-up scrolling mode, a swipe-down refreshing mode, or the like. The swipe-up scrolling mode is a mode in which content on the display screen of the user terminal is refreshed downward through swiping from bottom to top on the screen. To be specific, content returned by the content server to the user terminal may be arranged from top to bottom according to a display order corresponding to the content, that is, content with a higher display order is arranged closer to the top, and content with a lower display order is arranged closer to the bottom. Therefore, when the user swipes up on the display screen of the user terminal, content with a higher display order can be seen by the user earlier. The swipe-down refreshing mode is a mode in which content on the display screen of the user terminal is refreshed upward through swiping from top to bottom on the screen. To be specific, content returned by the content server to the user terminal may be arranged from bottom to top according to a display order corresponding to the content, that is, content with a higher display order is arranged closer to the bottom, and content with a lower display order is arranged closer to the top. Therefore, when the user swipes down on the display screen of the user terminal, content with a higher display order can be seen by the user earlier.

Optionally, before the receiving target content fed back by the content server, the method includes:
obtaining an exposure status of current content on the user terminal, and sending the content obtaining request to the content server based on the exposure status.

According to a second aspect, an embodiment of this application provides a user terminal, including:
a behavior data obtaining module, configured to obtain user behavior data corresponding to the user terminal and to-be-displayed content on the user terminal;
an exposure probability determining module, configured to determine an exposure probability of the to-be-displayed content based on the user behavior data;
an exposure probability sending module, configured to send the exposure probability to a content server; and
a target content obtaining module, configured to receive target content fed back by the content server, where the target content is determined based on the exposure probability, and the target content is triggered by the content server after the content server receives a content obtaining request sent by the user terminal.

In a possible implementation of the second aspect, the user terminal further includes:
a historical behavior data obtaining module, configured to obtain historical user behavior data corresponding to the user terminal; and
a first browsing duration determining module, configured to determine, based on the historical user behavior data, first browsing duration corresponding to the user terminal in each preset time period.

Optionally, the user behavior data includes a current browsing time and second browsing duration, and the exposure probability determining module includes:
a target time period determining unit, configured to determine, based on the current browsing time, a target time period to which the user terminal currently belongs, where the target time period is any one of the preset time periods; and
a first exposure probability determining unit, configured to determine the exposure probability of the to-be-displayed content based on the second browsing duration and first browsing duration corresponding to the target time period.

Specifically, the first exposure probability determining unit includes:
a browsing time determining subunit, configured to determine, based on the current browsing time and the second browsing duration, an initial browsing time corresponding to the user terminal and a preset browsing time corresponding to the to-be-displayed content; and
a first exposure probability determining subunit, configured to determine the exposure probability of the to-be-displayed content based on the initial browsing time, the preset browsing time, and the first browsing duration corresponding to the target time period.

In a possible implementation of the second aspect, the user behavior data includes operation behavior data, and the exposure probability determining module includes:
a mode determining unit, configured to determine an operation mode corresponding to the operation behavior data and a display mode corresponding to the to-be-displayed content; and
a second exposure probability determining unit, configured to determine the exposure probability of the to-be-displayed content based on the operation mode and the display mode.

Optionally, the user terminal further includes:
a request sending module, configured to obtain an exposure status of current content on the user terminal, and send the content obtaining request to the content server based on the exposure status.

According to a third aspect, an embodiment of this application provides a computer-readable storage medium. The computer-readable storage medium stores a computer program. When the computer program is executed by a processor, the content obtaining method according to any one of the implementations of the first aspect is implemented.

It may be understood that, for beneficial effects of the second aspect to the third aspect, refer to related descriptions in the first aspect. Details are not described herein again.

Compared with a conventional technology, the embodiments of this application have the following beneficial effects: In the embodiments of this application, the user terminal may predict the exposure probability of the to-be-displayed content on the user terminal by obtaining the user behavior data, and may upload the predicted exposure probability to the content server, so that the content server may determine the target content based on the exposure probability, to avoid repeated exposure or missing exposure of content on the user terminal, and improve user experience.

### BRIEF DESCRIPTION OF DRAWINGS

FIG. 1a to FIG. 1c are schematic diagrams of an application scenario in a conventional technology;
FIG. 2 is a schematic system diagram of a content obtaining system according to an embodiment of this application;
FIG. 3 is a schematic diagram of a structure of a user terminal according to an embodiment of this application;
FIG. 4 is a schematic diagram of a structure of a mobile phone to which a content obtaining method according to an embodiment of this application is applicable;
FIG. 5 is a schematic diagram of a software architecture to which a content obtaining method according to an embodiment of this application is applicable;
FIG. 6 is a schematic flowchart of a content obtaining method according to an embodiment of this application;
FIG. 6a and FIG. 6b are diagrams of examples of a display manner corresponding to target content according to an embodiment of this application;
FIG. 7 is a schematic flowchart of a content obtaining method according to another embodiment of this application;
FIG. 8 is a schematic diagram of a structure of a user terminal according to an embodiment of this application;
FIG. 9 is a schematic flowchart of a content obtaining method according to another embodiment of this application; and
FIG. 10 is a schematic diagram of a structure of a content server according to an embodiment of this application.

### DESCRIPTION OF EMBODIMENTS

In the following descriptions, to illustrate rather than limit, specific details such as a particular system structure and a technology are provided to make a thorough understanding of embodiments of this application. However, a person skilled in the art should know that this application may also be implemented in other embodiments without these specific details. In other cases, detailed descriptions of well-known systems, apparatuses, circuits, and methods are omitted, so that this application is described without being obscured by unnecessary details.

It should be understood that, when used in the specification and claims of this application, the term "include" indicates presence of described features, entireties, steps, operations, elements, and/or components, but does not exclude presence or addition of one or more other features, entireties, steps, operations, elements, components, and/or collections thereof.

It should be further understood that the term "and/or" used in the specification and claims of this application indicates any combination and all possible combinations of one or more items listed in association, and includes the combinations.

As used in the specification and claims of this application, the term "if" may be interpreted as "when", "once", "in response to determining", or "in response to detecting" depending on the context. Similarly, the phrase "if it is determined" or "if the [described condition or event] is detected" may be interpreted as a meaning of "once determined" or "in response to determining" or "once the [described condition or event] is detected" or "in response to detecting the [described condition or event]" depending on the context.

In addition, in the descriptions of the specification and claims of this application, the terms "first", "second", "third", and the like are merely used for differentiation and description, but shall not be understood as an indication or an implication of relative importance.

Referring to "an embodiment" or "some embodiments" or the like in the specification of this application means that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment, instead, they mean "one or more but not all of the embodiments", unless otherwise specifically emphasized. The terms "include", "contain", "have", and their variants all mean "include but are not limited to", unless otherwise specifically emphasized.

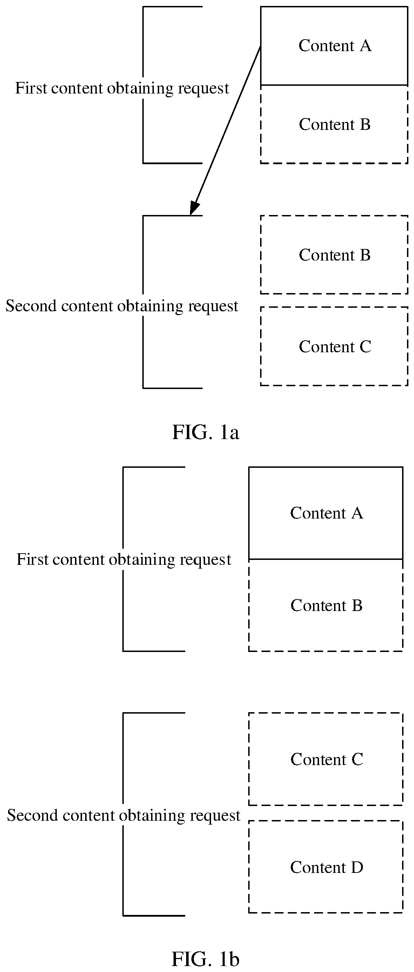

When obtaining content, a user terminal usually requests a plurality of screens of content at a time in one content obtaining request, that is, may load a plurality of screens of content from a content server at a time. As shown in FIG. 1a, in an application scenario, the user terminal may request two screens of content at a time in one content obtaining request, and may display the two screens of content one by one on a current display screen of the user terminal. For example, content A may be first displayed on the current display screen, and content B may be displayed on the current display screen after a user performs a corresponding operation on the current display screen.

To optimize user experience, when displaying content, the user terminal may send a next content obtaining request to the content server in advance. As shown in FIG. 1a, when the user terminal displays the content A obtained by a first content obtaining request (in this case, the content B obtained by the first content obtaining request has not been displayed), the user terminal may continue to send a second content obtaining request to the content server. When the content server receives the second content obtaining request, because no exposure event of the content B has been received, the content server directly determines that the content B is in an unexposed state, and therefore re-pushes the content B, where the exposure event is used to identify whether the content B is in an exposed state or in the unexposed state, and the exposed state is a state in which the content B has been displayed on the display screen of the user terminal. However, when the content B is re-pushed, the content B obtained by the first content obtaining request may have been displayed or is about to be displayed, thereby causing repeated exposure of the content B on the user terminal, and degrading user experience.

In a conventional technology, after returning content according to a content obtaining request sent by a user terminal, a content server may record a content list corresponding to the returned content, and return different content to the user terminal based on the content list when receiving a next content obtaining request, to resolve a problem of repeated exposure of content on the user terminal. However, the content server usually returns a plurality of screens of corresponding content to the user terminal in a fixed mode. For example, the content server returns a plurality of screens of corresponding content in a swipe-up scrolling mode or returns a plurality of screens of corresponding content in a swipe-down refreshing mode. The swipe-up scrolling mode is a mode in which content on a screen is refreshed downward through swiping from bottom to top on the screen. The swipe-down refreshing mode is a mode in which content on a screen is refreshed upward through swiping from top to bottom on the screen. Therefore, as shown in FIG. 1b, when the content server returns the content A and the content B in the swipe-up scrolling mode in response to the first content obtaining request, and the content A is displayed on the user terminal (that is, the content B is to be displayed), if the user performs a swipe-down operation, the content B is not displayed on the display screen of the user terminal, and content returned by the content server in response to the second content obtaining request is content C and content D, thereby causing missing exposure of the content B; or when the content server returns the content A and the content B in the swipe-down refreshing mode in response to the first content obtaining request, and the content A is displayed on the user terminal (that is, the content B is to be displayed), if the user performs a swipe-up operation, the content B is not displayed on the display screen of the user terminal, and content returned by the content server in response to the second content obtaining request is content C and content D, thereby causing missing exposure of the content B.

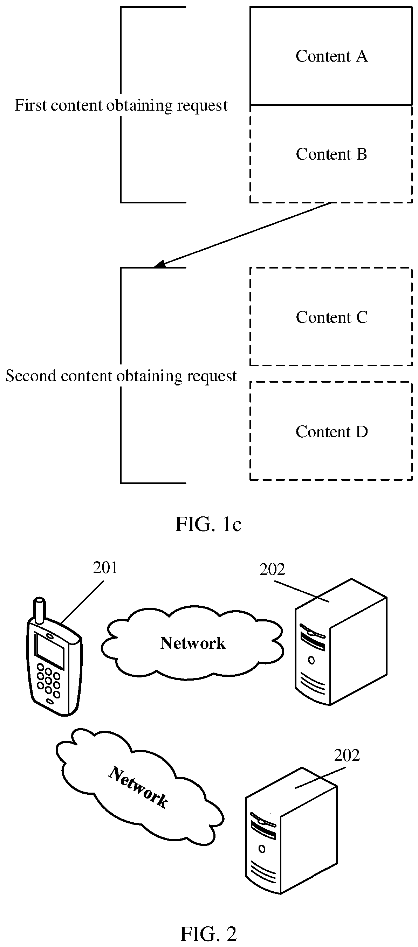

In the conventional technology, the user terminal may not send a next content obtaining request in advance, to resolve a problem of repeated exposure or missing exposure of content on the user terminal. For example, as shown in FIG. 1c, after obtaining the content A and the content B that are returned by the content server in response to the first content obtaining request, the user terminal does not send the second content obtaining request to the content server in advance, but sends the second content obtaining request to the content server after both the content A and the content B are exposed, that is, after it is determined that both the content A and the content B have been displayed on the display screen of the user terminal. Content loading on a network has a specific delay. If content is not obtained in advance, a content obtaining speed is reduced, thereby affecting user experience.

To resolve the foregoing problem, the embodiments of this application provide a content obtaining method, a user terminal, a content server, and a content obtaining system, to avoid repeated exposure or missing exposure of content on a user terminal while ensuring a content obtaining speed, thereby improving user experience.

As shown in FIG. 2, a content obtaining system provided in an embodiment of this application may include a user terminal 201 and a content server 202. The user terminal 201 is communicatively connected to the content server 202 through a network. The content server 202 may be a server disposed on the network side.

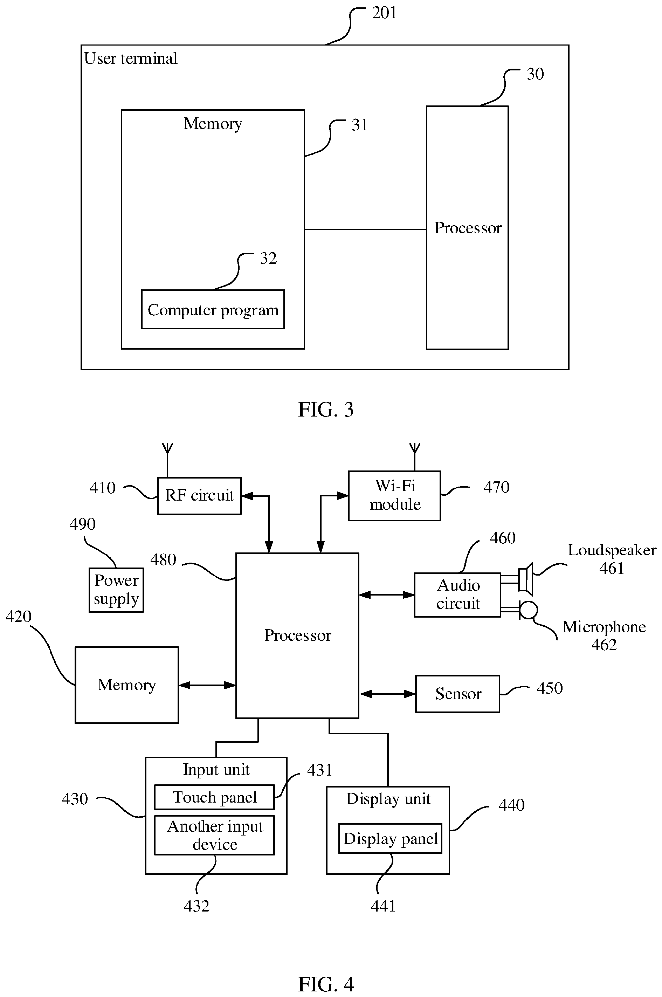

As shown in FIG. 3, the user terminal 201 includes at least one processor 30 (only one processor is shown in FIG. 3), a memory 31, and a computer program 32 that is stored in the memory 31 and can be run on the at least one processor 30. When the processor 30 executes the computer program 32, steps in any one of the following content obtaining method embodiments are implemented.

The user terminal 201 may include but is not limited to the processor 30 and the memory 31. A person skilled in the art can understand that FIG. 3 shows merely an example of the user terminal 201, and does not constitute a limitation on the user terminal 201. The user terminal 201 may include more or fewer components than those shown in the figure, or some components may be combined, or different components may be included. For example, the user terminal 201 may further include an input/output device and a network access device.

The processor 30 may be a central processing unit (Central Processing Unit, CPU); or the processor 30 may be another general purpose processor, a digital signal processor (Digital Signal Processor, DSP), an application-specific integrated circuit (Application Specific Integrated Circuit, ASIC), a field programmable gate array (Field-Programmable Gate Array, FPGA) or another programmable logic device, a discrete gate or transistor logic device, a discrete hardware component, or the like. The general purpose processor may be a microprocessor, or the processor may be any conventional processor or the like.

In some embodiments, the memory 31 may be an internal storage unit of the user terminal 201, for example, a hard disk drive or a memory of the user terminal 201. In some other embodiments, the memory 31 may be alternatively an external storage device of the user terminal 201, for example, a plug-in hard disk, a smart media card (Smart Media Card, SMC), a secure digital (Secure Digital, SD) card, or a flash card (Flash Card) that is disposed in the user terminal 201. Further, the memory 31 may alternatively include both an internal storage unit of the user terminal 201 and an external storage device. The memory 31 is configured to store an operating system, an application, a boot loader (BootLoader), data, and another program, for example, program code of the computer program. The memory 31 may further be configured to temporarily store data that has been output or is to be output.

Similarly, the content server 202 may also include at least one processor, a memory, and a computer program that is stored in the memory and can be run on the at least one processor. When the processor executes the computer program, steps in any one of the following content obtaining method embodiments are implemented. Herein, principles of the processor and the memory are the same as those of the processor 30 and the memory 31. For brevity, details are not described herein again.

The user terminal 201 may be a terminal device such as a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA). A specific type of the user terminal is not limited in this embodiment of this application.

For example, the user terminal is a mobile phone. FIG. 4 is a block diagram of a partial structure of the mobile phone according to an embodiment of this application. With reference to FIG. 4, the mobile phone includes components such as a radio frequency (Radio Frequency, RF) circuit 410, a memory 420, an input unit 430, a display unit 440, a sensor 450, an audio circuit 460, a wireless fidelity (wireless fidelity, Wi-Fi) module 470, a processor 480, and a power supply 490. A person skilled in the art may understand that a structure of the mobile phone shown in FIG. 4 constitutes no limitation on the mobile phone, and may include more or fewer parts than those shown in the figure, or combine some parts, or have different part arrangements.

The following describes the components of the mobile phone in detail with reference to FIG. 4.

An RF circuit 410 may be configured to receive and send a signal in an information receiving or sending process or during a call, and particularly, after receiving downlink information of a base station, send the downlink information to the processor 480 for processing; and in addition, send related uplink data to the base station. Usually, an RF circuit includes but is not limited to including an antenna, at least one amplifier, a transceiver, a coupler, a low noise amplifier (Low Noise Amplifier, LNA), a duplexer, and the like. In addition, the RF circuit 410 may further communicate with a network and another device through wireless communication. Wireless communication may use any communication standard or protocol, including but not limited to including global system for mobile communications (Global System of Mobile communication, GSM), a general packet radio service (General Packet Radio Service, GPRS), code division multiple access (Code Division Multiple Access, CDMA), wideband code division multiple access (Wideband Code Division Multiple Access, WCDMA), long term evolution (Long Term Evolution, LTE), an email, a short message service (Short Messaging Service, SMS), and the like.

The memory 420 may be configured to store a software program and a module. The processor 480 executes various function applications of the mobile phone and data processing by running the software program and the module that are stored in the memory 420. The memory 420 may mainly include a program storage area and a data storage area. The program storage area may store an operating system, an application program required for at least one function (such as a sound playing function and an image display function), and the like. The data storage area may store data created based on use of the mobile phone (such as audio data and a phone book), and the like. In addition, the memory 420 may include a high-speed random access memory, and may further include a nonvolatile memory such as at least one magnetic disk storage component, a flash memory component, or another volatile solid-state storage component.

The input unit 430 may be configured to receive input digit or character information, and generate a key signal input related to a user setting and function control of the mobile phone. Specifically, the input unit 430 may include a touch panel 431 and another input device 432. The touch panel 431, which is also referred to as a touchscreen, may collect a touch operation (for example, an operation of a user on the touch panel 431 or near the touch panel 431 by using any appropriate object or accessory such as a finger or a stylus) of a user on or near the touch panel 431, and drive a corresponding connection apparatus according to a preset program. Optionally, the touch panel 431 may include two parts: a touch detection apparatus and a touch controller. The touch detection apparatus detects a touch direction of the user, detects a signal caused by a touch operation, and transfers the signal to the touch controller. The touch controller receives touch information from the touch detection apparatus, converts the touch information into touch point coordinates, and sends the touch point coordinates to the processor 480. The touch controller can receive and execute a command sent by the processor 480. In addition, the touch panel 431 may be of a resistive type, a capacitive type, an infrared type, a surface acoustic wave type, or the like. In addition to the touch panel 431, the input unit 330 may further include the another input device 432. Specifically, the another input device 432 may include but is not limited to one or more of a physical keyboard, a function key (for example, a volume control key or a power on/off key), a trackball, a mouse, an operating lever, or the like.

The display unit 440 may be configured to display information input by the user, information provided for the user, and various menus of the mobile phone. The display unit 440 may include a display panel 441. Optionally, the display panel 441 may be configured in a form of a liquid crystal display (Liquid Crystal Display, LCD), an organic light-emitting diode (Organic Light-Emitting Diode, OLED), or the like. Further, the touch panel 431 may cover the display panel 441. When detecting a touch operation on or near the touch panel 431, the touch panel 431 transfers the touch operation to the processor 480, to determine a type of the touch event, and then the processor 480 provides corresponding visual output on the display panel 441 based on the type of the touch event. In FIG. 4, the touch panel 431 and the display panel 441 are used as two independent components to implement input and input functions of the mobile phone. However, in some embodiments, the touch panel 431 may be integrated with the display panel 441 to implement the input and output functions of the mobile phone.

The mobile phone may further include at least one sensor 450, such as a light sensor, a motion sensor, or another sensor. Specifically, the light sensor may include an ambient light sensor and a proximity sensor. The ambient light sensor may adjust luminance of the display panel 441 based on brightness of ambient light, and the proximity sensor may turn off the display panel 441 and/or backlight when the mobile phone moves to an ear of the user. As a type of motion sensor, an accelerometer sensor may detect a value of acceleration in each direction (usually, on three axes), may detect a value and a direction of gravity when the mobile phone is in a static state, and may be used in an application for identifying a mobile phone posture (such as screen switching between a landscape mode and a portrait mode, a related game, or magnetometer posture calibration), a function related to vibration identification (such as a pedometer or a knock), and the like. Other sensors such as a gyroscope, a barometer, a hygrometer, a thermometer, and an infrared sensor may be further disposed in the mobile phone. Details are not described herein.

The audio circuit 460, a loudspeaker 461, and a microphone 462 may provide an audio interface between the user and the mobile phone. The audio circuit 460 may convert received audio data into an electric signal and transmit the electric signal to the loudspeaker 461. The loudspeaker 461 converts the electric signal into a sound signal for output. In addition, the microphone 462 converts a collected sound signal into an electric signal. The audio circuit 460 receives the electric signal, converts the electric signal into audio data, and outputs the audio data to the processor 480 for processing. The processor 480 then sends the audio data to, for example, another mobile phone by using the RF circuit 410, or outputs the audio data to the memory 420 for further processing.

Wi-Fi is a short-distance wireless transmission technology. The mobile phone may help, by using the Wi-Fi module 470, the user receive and send an email, browse a web page, access streaming media, and the like. The Wi-Fi module 470 provides wireless broadband Internet access for the user. Although the Wi-Fi module 470 is shown in FIG. 4, it may be understood that the Wi-Fi module 470 is not a mandatory component of the mobile phone, and may be omitted according to a requirement provided that the essence of the present invention is not changed.

The processor 480 is a control center of the mobile phone, is connected to all parts of the entire mobile phone by various interfaces and lines, and performs various functions of the mobile phone and data processing by running or executing the software program and/or the module stored in the memory 420 and by invoking data stored in the memory 420, to perform overall monitoring on the mobile phone. Optionally, the processor 480 may include one or more processing units. Preferably, the processor 480 may integrate an application processor and a modem processor. The application processor mainly processes an operating system, a user interface, an application program, and the like. The modem processor mainly processes wireless communication. It may be understood that the foregoing modem processor may not be integrated into the processor 380.

The mobile phone further includes the power supply 490 (for example, a battery) that supplies power to the components. Preferably, the power supply may be logically connected to the processor 480 by using a power management system, so that functions such as charging and discharging management and power consumption management are implemented by using the power management system.

The mobile phone may further include a camera, which is not shown though. Optionally, the camera on the mobile phone may be a front-facing camera or a rear-facing camera. This is not limited in this embodiment of this application.

Optionally, the mobile phone may include a single-lens camera, a dual-camera, a triple-lens camera, or the like. This is not limited in this embodiment of this application.

For example, the mobile phone may include a triple-lens camera, where one is a primary camera, one is a wide-angle camera, and one is a long-focus camera.

Optionally, when the mobile phone includes a plurality of cameras, the plurality of cameras may be all front-facing or all rear-facing cameras. Alternatively, some are front-facing cameras and the others are rear-facing cameras. This is not limited in this embodiment of this application.

In addition, although not shown, the mobile phone may further include a Bluetooth module and the like. Details are not described herein.

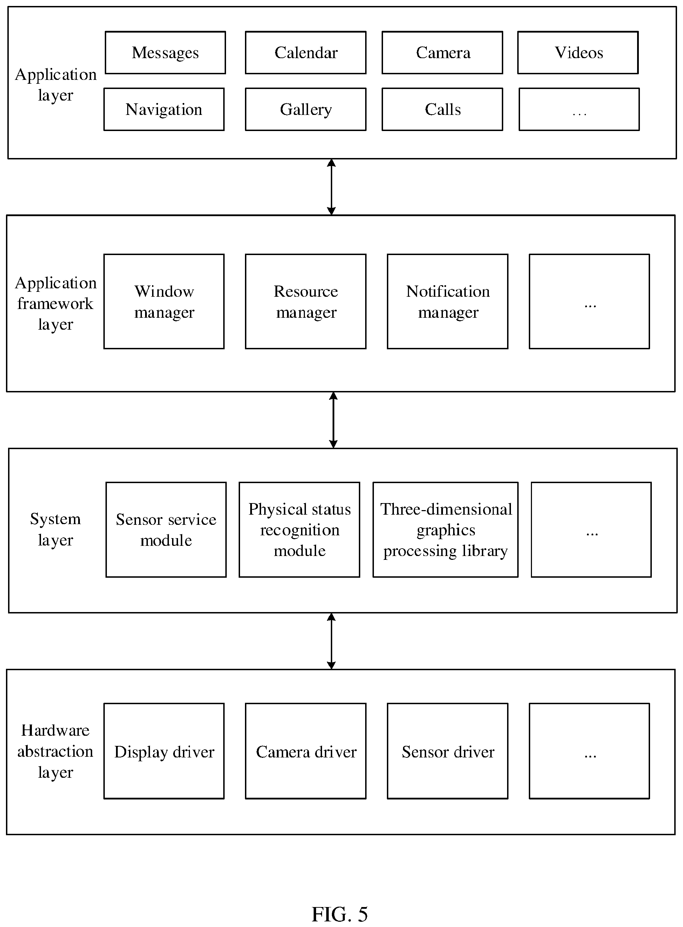

FIG. 5 is a schematic diagram of a software structure of a mobile phone according to an embodiment of this application. For example, an operating system of the mobile phone is an Android system. In some embodiments, the Android system is divided into four layers: an application layer, an application framework layer (framework, FWK), a system layer, and a hardware abstraction layer. The layers communicate with each other through a software interface.

As shown in FIG. 5, the application layer may include a series of application packages, and the application packages may include applications such as "Messages", "Calendar", "Camera", "Videos", "Navigation", "Gallery", and "Calls".

The application framework layer provides an application programming interface (application programming interface, API) and a programming framework for an application at the application layer. The application framework layer may include some predefined functions, such as a function for receiving an event sent by the application framework layer.

As shown in FIG. 5, the application framework layer may include a window manager, a resource manager, a notification manager, and the like.

The window manager is configured to manage a window program. The window manager may obtain a size of a display, determine whether there is a status bar, perform screen locking, take a screenshot, and the like. The content provider is configured to: store and obtain data, and enable the data to be accessed by an application. The data may include a video, an image, audio, calls that are made and received, a browsing history and bookmarks, a phone book, and the like.

The resource manager provides, for an application, various resources such as a localized character string, an icon, an image, a layout file, and a video file.

The notification manager enables an application to display notification information in the status bar, and may be configured to convey a notification message. The notification manager may automatically disappear after a short pause without user interaction. For example, the notification manager is configured to notify download completion, provide a message notification, and the like. The notification manager may be a notification that appears in a top status bar of the system in a form of a graph or a scroll bar text, for example, a notification of an application running in the background, or may be a notification that appears on a screen in a form of a dialog window. For example, text information is prompted in the status bar, a prompt tone is produced, the electronic device vibrates, or an indicator light blinks.

The application framework layer may further include:
a view system, where the view system includes visual controls such as a control for displaying a text and a control for displaying an image. The view system may be configured to construct an application. A display interface may include one or more views. For example, a display interface including an SMS message notification icon may include a text display view and an image display view.

A phone manager is configured to provide a communication function of the mobile phone, for example, management of a call status (including answering, declining, or the like).

The system layer may include a plurality of functional modules, for example, a sensor service module, a physical status recognition module, and a three-dimensional graphics processing library (for example, OpenGL ES).

The sensor service module is configured to monitor sensor data uploaded by various types of sensors at a hardware layer, to determine a physical status of the mobile phone.

The physical status recognition module is configured to analyze and recognize a user gesture, a human face, and the like.

The three-dimensional graphics processing library is configured to implement three-dimensional graphics drawing, image rendering, composition, layer processing, and the like.

The system layer may further include:
a surface manager, configured to manage a display subsystem and provide fusion of 2D and 3D layers for a plurality of applications.

A media library supports playback and recording in a plurality of commonly used audio and video formats, a static image file, and the like. The media library may support a plurality of audio and video encoding formats, such as MPEG4, H.264, MP3, AAC, AMR, JPG, and PNG.

The hardware abstraction layer is a layer between hardware and software. The hardware abstraction layer may include a display driver, a camera driver, an audio driver, a sensor driver, and the like, configured to drive related hardware at the hardware layer, for example, a display screen, a camera, a loudspeaker, and a sensor.

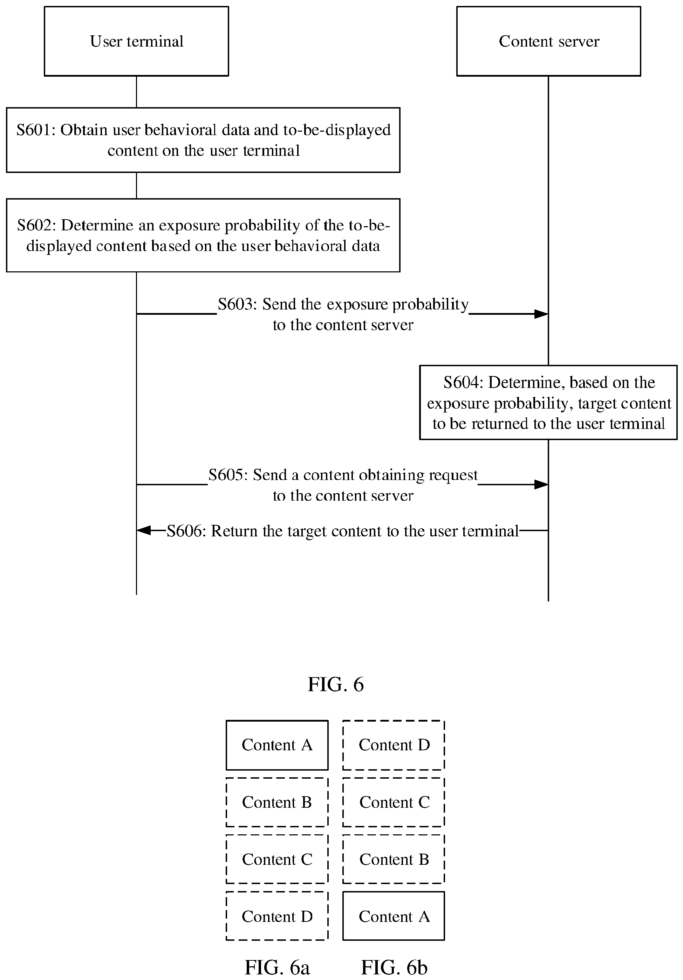

The following describes an interaction process between a user terminal and a content server. As shown in FIG. 6, a content obtaining method provided in this embodiment of this application may include the following steps.

S601: A user terminal obtains user behavior data and to-be-displayed content on the user terminal.

For example, the user terminal is a mobile phone. In this embodiment of this application, an application program APP capable of obtaining content is installed on the mobile phone, and a user may obtain content from a content server corresponding to the APP on the mobile phone by using the APP. Specifically, when the user uses the APP on the mobile phone, the APP on the mobile phone may request content from the content server based on an operation performed by the user in the APP, and the content server may return corresponding content to the APP according to the request, where the returned content may be displayed in the APP. The content may be news, an advertisement, and/or the like. In addition, the content may be content in a form of a picture, content in a form of a video, or content in a form of a text. This is not limited in this embodiment of this application.

It should be understood that the APP may collect user behavior data of the user in a process of using the APP by the user. The user behavior data includes but is not limited to browsing behavior data and operation behavior data. The browsing behavior data includes but is not limited to a browsing time, browsing duration, and other data. The operation behavior data includes but is not limited to data corresponding to a swipe-up scrolling behavior, data corresponding to a swipe-down refreshing behavior, data corresponding to a tap-to-switch behavior, and the like. In other words, the operation behavior data is behavior data corresponding to an operation performed by the user on a screen of the APP.

It should be noted that the content obtaining method provided in this embodiment of this application is preferably applicable to a scenario in which the APP has obtained content from the content server and is displaying the content. To be specific, when the user starts the APP on the mobile phone, the APP may send a first content obtaining request to the content server based on an operation performed by the user in the APP (that is, send a content obtaining request to the content server for the first time), and the content server may directly return corresponding first content to the APP according to the first content obtaining request. The first content may include a plurality of screens of content, and the screen corresponds to a display screen of the APP on the mobile phone. When returning the plurality of screens of content, the content server may also determine a display order corresponding to each screen of content.

For example, when the first content includes an advertisement A and an advertisement B, and the advertisement A needs to be preferentially displayed before the advertisement B, the content server may set the advertisement A on a first screen, and may set the advertisement B on a second screen. When the content server returns the first content to the APP, the APP may preferentially display the first screen (namely, the advertisement A), and then display the second screen (namely, the advertisement B).

Herein, when the APP displays the advertisement A, the advertisement B is in an unexposed state. In this case, the advertisement B is to-be-displayed content in the APP on the mobile phone. To be specific, to-be-displayed content on the mobile phone is content that is returned by the content server to the mobile phone in response to a content obtaining request of the APP but has not been displayed in the APP on the mobile phone.

S602: The user terminal determines an exposure probability of the to-be-displayed content based on the user behavior data.

It should be understood that the exposure probability of the to-be-displayed content is a probability of displaying the to-be-displayed content on the display screen of the APP to be viewed by the user. Whether the to-be-displayed content is to be displayed on the display screen of the APP is usually related to a behavior of using the APP by the user. Therefore, the APP may predict, based on the user behavior data of using the APP by the user, the exposure probability of displaying the to-be-displayed content on the display screen of the APP.

Optionally, the APP may obtain historical user behavior data corresponding to the APP, and may determine, based on the historical user behavior data, first browsing duration corresponding to the APP in each preset time period. The historical user behavior data includes historical browsing behavior data of content browsing performed by the user in the APP. The historical browsing behavior data may include a historical browsing time, historical browsing duration, and the like. Herein, the historical browsing behavior data may be browsing behavior data of the user in the APP in the last week, month, or year.

Herein, the preset time period may be determined based on a specific case. For example, based on the historical browsing time, 0:00 to 7:00 may be determined as a first preset time period, 7:00 to 12:00 may be determined as a second preset time period, 12:00 to 18:00 may be determined as a third preset time period, and 18:00 to 24:00 may be determined as a fourth preset time period. The first browsing duration may be determined based on historical browsing duration corresponding to each preset time period. For example, average browsing duration of historical browsing duration corresponding to each preset time period may be determined as first browsing duration corresponding to the preset time period. Alternatively, a weight may be set for historical browsing duration based on an interval between a current moment and a historical browsing time corresponding to each historical browsing behavior, and then weighted summation may be performed on historical browsing duration corresponding to each preset time period to obtain first browsing duration corresponding to the preset time period.

In a possible implementation, the user behavior data obtained by the APP may include a current browsing time and second browsing duration. The current browsing time is a moment at which the user is currently browsing the APP, and the second browsing duration is duration in which the user has been browsing the APP. In this case, the APP may determine, based on the current browsing time, a target time period to which the user terminal currently belongs, where the target time period is any one of the preset time period; and may determine the exposure probability of the to-be-displayed content based on the second browsing duration and first browsing duration corresponding to the target time period.

Specifically, the APP may determine, based on the current browsing time and the second browsing duration, an initial browsing time corresponding to the user terminal and a preset browsing time corresponding to the to-be-displayed content, and may determine the exposure probability of the to-be-displayed content based on the initial browsing time, the preset browsing time, and the first browsing duration corresponding to the target time period.

For example, average browsing duration corresponding to content may be determined based on the second browsing duration and a quantity of browsed content corresponding to the second browsing duration. In addition, the preset browsing time corresponding to the to-be-displayed content may be predicted based on a quantity of content existing before the to-be-displayed content, the average browsing duration, and the initial browsing time.

For example, duration required for displaying the to-be-displayed content may be calculated based on the preset browsing time and the initial browsing time, and the exposure probability of the to-be-displayed content may be determined based on a magnitude relationship between the required duration and the first browsing duration corresponding to the target time period. If the required duration is more less than the first browsing duration corresponding to the target time period, it is determined that the exposure probability of the to-be-displayed content is higher. If the required duration is more greater than the first preset duration corresponding to the target time period, it is determined that the exposure probability of the to-be-displayed content is lower.

For example, when the first preset duration corresponding to the target time period is 10 minutes and it is learned through calculation that required duration for to-be-displayed content A is 4 minutes, required duration for to-be-displayed content B is 6 minutes, required duration for to-be-displayed content C is 9 minutes, and required duration for to-be-displayed content D is 12 minutes, the APP may determine that an exposure probability of the to-be-displayed content A is 90%, an exposure probability of the to-be-displayed content B is 80%, an exposure probability of the to-be-displayed content C is 65%, and an exposure probability of the to-be-displayed content D is 40%.

In another possible implementation, the user behavior data obtained by the APP may include operation behavior data. In this case, the APP may determine an operation mode corresponding to the operation behavior data and a display mode corresponding to the to-be-displayed content, and determine the exposure probability of the to-be-displayed content based on the operation mode and the display mode.

It should be noted that the display mode corresponding to the to-be-displayed content is a mode in which content is displayed in the APP on the mobile phone, and the display mode may be a swipe-up scrolling mode, a swipe-down refreshing mode, or the like. The swipe-up scrolling mode is a mode in which content on the display screen of the APP is refreshed downward through swiping from bottom to top on the screen. To be specific, content returned by the content server to the APP may be arranged from top to bottom according to a display order corresponding to the content, that is, content with a higher display order is arranged closer to the top, and content with a lower display order is arranged closer to the bottom. Therefore, when the user swipes up on the display screen of the APP, content with a higher display order can be seen by the user earlier. The swipe-down refreshing mode is a mode in which content on the display screen of the APP is refreshed upward through swiping from top to bottom on the screen. To be specific, content returned by the content server to the APP may be arranged from bottom to top according to a display order corresponding to the content, that is, content with a higher display order is arranged closer to the bottom, and content with a lower display order is arranged closer to the top. Therefore, when the user swipes down on the display screen of the APP, content with a higher display order can be seen by the user earlier.

For example, the display mode may be determined by the APP based on a current operation behavior of the user, that is, may be determined based on a current operation behavior performed by the user in the APP when the APP obtains to-be-displayed content in the APP. The current operation behavior may be an operation behavior performed by the user in the APP when the APP obtains to-be-displayed content in the APP, or may be an operation behavior most recently performed by the user in the APP when the APP obtains to-be-displayed content in the APP. Herein, the current operation behavior may include a behavior of swiping up on the screen and a behavior of swiping down on the screen.

Specifically, when the APP determines that the current operation behavior is the behavior of swiping up on the screen, the APP may determine that the display mode corresponding to the to-be-displayed content is the swipe-up scrolling mode. Therefore, after obtaining content returned by the content server and a display order corresponding to the content, the APP may arrange the content from top to bottom according to the display order, so that content that needs to be displayed on the display screen of the APP earlier is arranged closer to the top, and content that needs to be displayed on the display screen of the APP later is arranged closer to the bottom.

Specifically, when the APP determines that the current operation behavior is the behavior of swiping down on the screen, the APP may determine that the display mode corresponding to the to-be-displayed content is the swipe-down refreshing mode. Therefore, after obtaining content returned by the content server and a display order corresponding to the content, the APP may arrange the content from bottom to top according to the display order, so that content that needs to be displayed on the display screen of the APP earlier is arranged closer to the bottom, and content that needs to be displayed on the display screen of the APP later is arranged closer to the top.

Optionally, the display mode may be alternatively determined by the content server based on a current operation behavior of the user. To be specific, when obtaining to-be-displayed content in the APP, the APP may also obtain a current operation behavior performed by the user in the APP, and may upload the current operation behavior to the content server; and the content server may arrange content based on the current operation behavior and a display order corresponding to the content, and may send the arranged content to the APP, so that the APP can directly display the content based on the received content without re-arranging the content, thereby increasing a speed of displaying content in the APP, and improving user experience.

It should be understood that the operation mode may include a swipe-up mode, a swipe-down mode, and the like. Herein, the APP may determine, based on whether a real-time operation mode of the user matches the display mode corresponding to the to-be-displayed content, the exposure probability of displaying the to-be-displayed content on the display screen of the APP.

For example, when the display mode of the to-be-displayed content is the swipe-up scrolling mode, if the user prefers to operate the APP in the swipe-down mode, it may be determined that the exposure probability of displaying the to-be-displayed content on the display screen of the APP is relatively low. For example, when the display mode of the to-be-displayed content is the swipe-down refreshing mode, if the user prefers to operate the APP in the swipe-up mode, it may be determined that the exposure probability of displaying the to-be-displayed content on the display screen of the APP is relatively low. For example, when the display mode of the to-be-displayed content is the swipe-up scrolling mode, if the user prefers to operate the APP in the swipe-up mode, it may be determined that the exposure probability of displaying the to-be-displayed content on the display screen of the APP is relatively high. For example, when the display mode of the to-be-displayed content is the swipe-down refreshing mode, if the user prefers to operate the APP in the swipe-down mode, it may be determined that the exposure probability of displaying the to-be-displayed content on the display screen of the APP is relatively high.

For example, when the display mode of the to-be-displayed content is the swipe-up scrolling mode, if the user prefers to operate the APP in the swipe-up mode, or when the display mode of the to-be-displayed content is the swipe-down refreshing mode, if the user prefers to operate the APP in the swipe-down mode, the current browsing time and the second browsing duration corresponding to the APP may be obtained, and the target time period to which the APP currently belongs may be determined based on the current browsing time, to determine the exposure probability of the to-be-displayed content based on the second browsing duration and the first browsing duration corresponding to the target time period.

S603: The user terminal sends the exposure probability to the content server.

Herein, after predicting the exposure probability of the to-be-displayed content, the APP on the mobile phone may send the exposure probability to the content server. It should be understood that, when sending the exposure probability to the content server, the APP may also send, to the content server, a content identifier of the to-be-displayed content corresponding to the exposure probability. When there are a plurality of pieces of to-be-displayed content in the APP on the mobile phone, the APP may predict an exposure probability of each piece of to-be-displayed content. Therefore, when the APP on the mobile phone sends each exposure probability to the content server, to enable the content server to learn of to-be-displayed content corresponding to the exposure probability, the APP may also send, to the content server, a content identifier that corresponds to the to-be-displayed content corresponding to the exposure probability. For example, a correspondence between an exposure probability and a content identifier of to-be-displayed content may be sent to the content server; or each exposure probability may be associated with a content identifier of corresponding to-be-displayed content, and then both the exposure probability and the content identifier are sent to the content server.

It should be understood that the content server usually may be communicatively connected to a plurality of mobile phones through a network. Therefore, when sending the exposure probability to the content server, the APP on the mobile phone may also send a device identifier corresponding to the mobile phone to the content server, so that after determining target content based on the exposure probability, the content server may accurately send the target content to the corresponding mobile phone based on the device identifier.

S604: The content server determines, based on the exposure probability, target content to be returned to the user terminal, where the target content includes the to-be-displayed content, or the target content does not include the to-be-displayed content.

It should be understood that, after obtaining an exposure probability of specific to-be-displayed content (for example, the advertisement B), the content server may determine, based on the exposure probability, whether the advertisement B is to be exposed in the APP of the mobile phone, to determine whether to return the advertisement B to the APP again when responding to a next content obtaining request of the APP. To be specific, when determining, based on the exposure probability, that the advertisement B is not to be exposed in the APP, the content server may return the advertisement B to the APP again when responding to a next content obtaining request of the APP, to avoid missing exposure of the advertisement B; or when determining, based on the exposure probability, that the advertisement B is to be exposed in the APP, the content server does not return the advertisement B to the APP again when responding to a next content obtaining request of the APP, to avoid repeated exposure of the advertisement B and improve user experience.

Herein, the content server may set a preset threshold to determine whether specific to-be-displayed content (for example, the advertisement B) is to be exposed in the APP on the mobile phone. Specifically, if the exposure probability of the advertisement B is less than the preset threshold, it may be considered that the advertisement B is not to be exposed in the APP on the mobile phone. In this case, the content server may determine first preset content as the target content to be returned to the mobile phone, where the first preset content may include the advertisement B. If the exposure probability of the advertisement B is greater than or equal to the preset threshold, it may be considered that the advertisement B is to be exposed in the APP on the mobile phone. In this case, the content server may determine second preset content as target content to be returned to the mobile phone, where the second preset content does not include the advertisement B.

It should be noted that the content server may set a unified preset threshold for different mobile phones (that is, different users). To be specific, the content server may determine, based on the unified preset threshold and exposure probabilities sent by APPs on different mobile phones, whether to-be-displayed content is to be displayed in an APP on a corresponding mobile phone, to increase a preset threshold obtaining speed by using the unified preset threshold, and improve efficiency of determining target content.

For example, the content server may determine, based on the preset threshold and an exposure probability A of to-be-displayed content (for example, the advertisement B) that is sent by an APP on a mobile phone A, whether the advertisement B is to be exposed in the APP on the mobile phone A; the content server may determine, based on the preset threshold and an exposure probability B of the advertisement B that is sent by an APP on a mobile phone B, whether the advertisement B is to be exposed in the APP on the mobile phone B; and the content server may determine, based on the preset threshold and an exposure probability C of the advertisement B that is sent by an APP on a mobile phone C, whether the advertisement B is to be exposed in the APP on the mobile phone C.

For example, the content server may obtain historical user behavior data collected by an APP on each mobile phone and an exposure result corresponding to the historical user behavior data, and may perform data analysis on all historical user behavior data and all exposure results to determine the preset threshold.

It should be understood that the content server may alternatively set different preset thresholds for different mobile phones (that is, different users), to improve accuracy of setting a preset threshold through differentiated settings of preset thresholds, and improve accuracy of determining target content. Herein, each specified preset threshold may be stored in a memory of the content server in association with a device identifier of a mobile phone corresponding to the preset threshold.

For example, the content server may set a preset threshold A for the mobile phone A, set a preset threshold B for the mobile phone B, and set a preset threshold C for the mobile phone C. To be specific, after obtaining the exposure probability A of the advertisement B that is sent by the APP on the mobile phone A, the content server may obtain a device identifier corresponding to the mobile phone A, find, based on the device identifier corresponding to the mobile phone A, the preset threshold A corresponding to the mobile phone A, and then determine, based on the preset threshold A and the exposure probability A, whether the advertisement B is to be exposed in the APP on the mobile phone A; after obtaining the exposure probability B of the advertisement B that is sent by the APP on the mobile phone B, the content server may obtain a device identifier corresponding to the mobile phone B, find, based on the device identifier corresponding to the mobile phone B, the preset threshold B corresponding to the mobile phone B, and then determine, based on the preset threshold B and the exposure probability B, whether the advertisement B is to be exposed in the APP on the mobile phone B; and so on.

For example, the content server may separately obtain historical user behavior data collected by an APP on each mobile phone and an exposure result corresponding to the historical user behavior data, and separately perform data analysis on each piece of historical user behavior data and each exposure result to determine a preset threshold corresponding to each mobile phone.

For example, the content server may obtain historical user behavior data A collected by the APP on the mobile phone A and an exposure result A corresponding to the historical user behavior data A, and may perform data analysis on the historical user behavior data A and the exposure result A to determine the preset threshold A corresponding to the mobile phone A; and the content server may obtain historical user behavior data B collected by the APP on the mobile phone B and an exposure result B corresponding to the historical user behavior data B, and may perform data analysis on the historical user behavior data B and the exposure result B to determine the preset threshold B corresponding to the mobile phone B. The historical user behavior data A and the historical user behavior data B each may be a data set including a plurality of pieces of behavior data. Correspondingly, the exposure result A and the exposure result B each may be a result set including a plurality of exposure results.

Herein, to increase a speed of displaying content in the APP and improve user experience, when obtaining content, the APP on the mobile phone may obtain a plurality of pieces of content at a time, that is, the content server may return a preset quantity of target content to the APP in response to one content obtaining request of the APP. The preset quantity may be determined by the content server, or may be determined by the content server based on the mobile phone.

For example, a preset quantity of target content to be returned to the APP each time may be preset on the content server. The content server may set a unified preset quantity for different mobile phones (that is, different users), or may set different preset quantities for different mobile phones. Alternatively, the user may set, in the APP on the mobile phone, a preset quantity of content requested by each content obtaining request. When determining to-be-returned target content based on the exposure probability, the content server may first determine a preset quantity corresponding to the mobile phone, and then may determine target content based on the preset quantity.

For example, in a specific application scenario, when the user sets, in the APP on the mobile phone, the preset quantity of content requested by each content obtaining request to three screens, the content server may obtain the preset quantity of three screens from the APP on the mobile phone when determining to-be-returned target content based on the exposure probability, and may obtain three screens of target content based on the exposure probability and use the three screens of target content as target content to be returned to the mobile phone.

It should be noted that the content server may determine, based on currently displayed content in the APP on the mobile phone or the to-be-displayed content corresponding to the exposure probability, target content to be returned to the mobile phone.

Specifically, the target content returned by the content server may be content similar to the currently displayed content in the APP on the mobile phone or the to-be-displayed content corresponding to the exposure probability, to determine the target content based on viewing interest of the user, and improve user experience.

It can be understood that the target content returned by the content server may be alternatively most popular content (for example, content with a highest click-through rate or most views) or latest content on the content server. This is not limited in this embodiment of this application.

Optionally, after determining a plurality of pieces of target content to be returned to the mobile phone, the content server may obtain a display order corresponding to each piece of target content and an operation mode corresponding to the APP on the mobile phone, and may determine, based on the operation mode and the display order, a display manner corresponding to the target content, to return the target content to the APP on the mobile phone based on the display manner.

The display order corresponding to each piece of target content may be determined by the content server. For example, the content server may determine, based on an association relationship between target content, the display order corresponding to each target content; or may determine the display order corresponding to each piece of target content based on popularity corresponding to the target content, where a display order corresponding to more popular target content is higher, and a display order corresponding to less popular target content is lower; or may determine the display order corresponding to each piece of target content based on a publishing time corresponding to the target content, where a display order corresponding to target content with a later publishing time is higher, and a display order corresponding to target content with an earlier publishing time is lower.

For example, the operation mode may include a swipe-up mode and a swipe-down mode. The display manner corresponding to the target content may be an arrangement manner corresponding to the target content.

As shown in FIG. 6a, when the operation mode is the swipe-up mode, the display manner may be a manner of performing arrangement from top to bottom according to a display order corresponding to each piece of target content. To be specific, content with a higher display order is arranged closer to the top, and content with a lower display order is arranged closer to the bottom. In this way, when the user obtains new content in the swipe-up mode, content with a higher display order can be seen by the user earlier. Content in a solid-line box is content that is displayed first, that is, content with a highest display order.

As shown in FIG. 6b, when the operation mode is the swipe-down mode, the display mode may be a manner of performing arrangement from bottom to top according to a display order corresponding to each piece of target content. To be specific, content with a higher display order is arranged closer to the bottom, and content with a lower display order is arranged closer to the top. In this way, when the user obtains new content in the swipe-down mode, content with a higher display order can be seen by the user earlier. Content in a solid-line box is content that is displayed first, that is, content with a highest display order.

S605: The user terminal sends a content obtaining request to the content server.

In a possible implementation, the APP on the mobile phone may obtain an exposure status of current content in the APP, and may send a content obtaining request to the content server based on the exposure status of the current content. Specifically, the content obtaining request may be sent to the content server when the exposure status of the current content meets a preset condition. The current content is all content obtained by the APP by using a previous content obtaining request. The exposure status includes an exposed state and an unexposed state. The exposed state means that the content has been displayed on the display screen of the APP. The unexposed state means that the content has not been displayed on the display screen of the APP. The preset condition may be that a quantity of content in an exposed state reaches a first preset value, or may be that a quantity of content in an unexposed state reaches a second preset value.

It should be noted that the first preset value is less than N, where N is a total quantity of content obtained by the APP by using the previous content obtaining request, or the second preset value is greater than 0, to ensure that the content obtaining request may be sent in advance when there is still undisplayed content in the APP, to obtain subsequent to-be-displayed target content from the content server in advance. In this way, when displaying the target content, the APP may not need to load the target content in real time from the content server, thereby reducing a waiting delay of content display in the APP, increasing a display speed of content display, and improving user experience.

Herein, the first preset value and the second preset value may be determined based on a specific case. For example, the first preset value and/or the second preset value may be determined based on target duration required by the APP to obtain the target content from the content server, average duration of displaying each screen of content by the APP, and a total quantity of screens of content obtained by a previous content obtaining request. For example, the first preset value and/or the second preset value may be determined based on the following: a quantity of remaining screens of previously obtained content × the average duration ≤ the target duration. The quantity of remaining screens of previously acquired content is a quantity of screens of content, of the previously obtained content, that has not been displayed on the display screen of the APP.

Alternatively, the first preset value and/or the second preset value may be determined based on user-defined settings in the APP. For example, if the user sets, in the APP, that a content obtaining request is to be sent to the content server when three screens of previously obtained content have not been displayed on, the APP may set the second preset value to 3; or if the user sets, in the APP, that a content obtaining request is to be sent to the content server when two screens of content in content previously obtained each time are displayed in the APP, the APP may set the first preset value to 2.

It should be understood that, an initial exposure status of content obtained by the APP from the content server may be an unexposed state by default, and when specific content is displayed on the display screen of the APP, the APP may change an exposure status of the content from an unexposed state to an exposed state.

In another possible implementation, the APP on the mobile phone may obtain display duration of current content in the APP, and may send a content obtaining request to the content server based on the display duration of the current content. Specifically, the content obtaining request may be sent to the content server when the display duration of the current content reaches preset duration. The preset duration may be determined based on target duration required by the APP to obtain the target content from the content server, average duration of displaying each screen of content by the APP, and a total quantity of screens of content obtained by a previous content obtaining request. For example, the preset duration may be determined based on the following: the preset duration + the target duration ≤ the average duration × the total quantity of screens. It should be understood that the preset duration may be alternatively customized by the user in the APP.

It should be noted that the exposure probability of the to-be-displayed content may be sent to the content server before the content obtaining request is sent, so that the content server may determine in advance the target content to be returned to the user terminal, and the content server may return the target content to the user terminal in a timely manner after when receiving the content obtaining request of the user terminal, thereby increasing a content obtaining speed on the user terminal. Certainly, the exposure probability of the to-be-displayed content may be alternatively sent to the content server together with the content obtaining request. To be specific, after the user terminal determines the exposure probability of the to-be-displayed content, when sending the content obtaining request to the content server, the user terminal may send the exposure probability of the to-be-displayed content to the content server together with the content obtaining request. This is not limited in this embodiment of this application.

S606: The content server returns the target content to the user terminal according to the content obtaining request.

Herein, after receiving the content obtaining request sent by the APP on the mobile phone, the content server may send, to the mobile phone, the target content determined based on the exposure probability uploaded by the APP. After receiving the target content, the mobile phone may display the target content according to an operation instruction of the user.

For example, when the target content returned by the content server includes the foregoing undisplayed content, the APP may directly display the target content on the display screen of the APP based on a swipe operation performed by the user in the APP.

For example, when the target content returned by the content server does not include the foregoing undisplayed content, the APP may set the target content on a next screen of the undisplayed content in the APP, and may first display the undisplayed content in the APP and then display the target content based on a swipe operation performed by the user in the APP.

In the embodiments of this application, the user terminal may predict the exposure probability of the to-be-displayed content on the user terminal by obtaining the user behavior data, and may upload the predicted exposure probability to the content server, so that the content server may determine the target content based on the exposure probability, to avoid repeated exposure or missing exposure of content on the user terminal, and improve user experience.

It should be understood that sequence numbers of the steps do not mean an execution sequence in the foregoing embodiments. The execution sequence of the processes should be determined based on functions and internal logic of the processes, and should not constitute any limitation on the implementation processes of embodiments of this application.

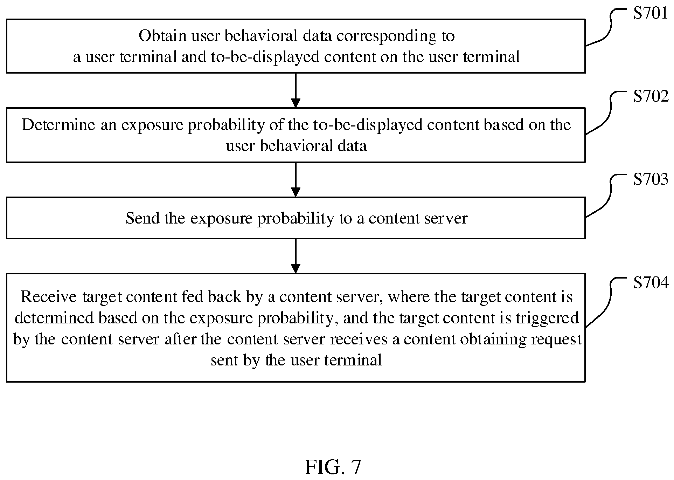

The following describes, from a perspective of a user terminal, a content obtaining method provided in an embodiment of this application. FIG. 7 is a schematic flowchart of a content obtaining method according to an embodiment of this application. As an example rather than a limitation, the content obtaining method may be applied to the foregoing mobile phone. The content obtaining method may include the following steps.

S701: Obtain user behavior data corresponding to the user terminal and to-be-displayed content on the user terminal.

Herein, for specific descriptions of S701, refer to S601 in the embodiment corresponding to FIG. 6. For brevity, details are not described herein again.

S702: Determine an exposure probability of the to-be-displayed content based on the user behavior data.

Herein, for specific descriptions of S702, refer to S602 in the embodiment corresponding to FIG. 6. For brevity, details are not described herein again.

S703: Send the exposure probability to a content server.

It should be understood that, after predicting the exposure probability of the to-be-displayed content, the user terminal may send the exposure probability to the content server, so that the content server may determine, in advance based on the exposure probability, target content to be returned to the content server, thereby increasing a content obtaining speed on the user terminal, and improving user experience.

It should be noted that, when there are a plurality of pieces of to-be-displayed content on the user terminal, the user terminal may separately determine an exposure probability of each piece of to-be-displayed content, and separately send the exposure probability of each piece of to-be-displayed content to the content server, so that the content server may summarize all exposure probabilities to determine target content to be returned to the user terminal.

Herein, when sending each exposure probability to the content server, the user terminal may also send, to the content server, a content identifier of to-be-displayed content corresponding to the exposure probability. For example, a correspondence between an exposure probability and a content identifier of to-be-displayed content may be sent to the content server; or each exposure probability may be associated with a content identifier of corresponding to-be-displayed content, and then both the exposure probability and the content identifier are sent to the content server.

It can be understood that, alternatively, after the user terminal predicts the exposure probability of the to-be-displayed content, when sending a content obtaining request to the content server, the user terminal may also send the exposure probability to the content server together with the content obtaining request. This is not limited in this embodiment of this application.

S704: Receive target content fed back by the content server, where the target content is determined based on the exposure probability, and the target content is triggered by the content server after the content server receives a content obtaining request sent by the user terminal.

Specifically, the user terminal may send the content obtaining request to the content server in advance based on an exposure status of current content on the user terminal, to obtain the target content fed back by the content server, and display the target content according to a current operation instruction of a user on the user terminal.

For example, when the current operation instruction of the user on the user terminal is different from a previous operation instruction of the user on the user terminal (for example, the previous operation instruction is a swipe-down instruction, and the current operation instruction is a swipe-up instruction), or when the target content returned by the content server includes the foregoing undisplayed content, the user terminal may directly display the target content on a display screen of the user terminal based on a swipe operation performed by the user on the user terminal.

For example, when the current operation instruction of the user on the user terminal is the same as a previous operation instruction of the user on the user terminal (for example, both the previous operation instruction and the current operation instruction are swipe-down instructions), or when the target content returned by the content server does not include the foregoing undisplayed content, the user terminal may set the target content on a next screen of the undisplayed content on the user terminal, and may first display the undisplayed content on the user terminal and then display the target content based on a swipe operation of the user on the user terminal.

Optionally, before the determining an exposure probability of the to-be-displayed content based on the user behavior data, the method may include: obtaining historical user behavior data corresponding to the user terminal; and determining, based on the historical user behavior data, first browsing duration corresponding to the user terminal in each preset time period.

In a possible implementation, the user behavior data includes a current browsing time and second browsing duration, and the determining an exposure probability of the to-be-displayed content based on the user behavior data may include:
determining, based on the current browsing time, a target time period to which the user terminal currently belongs, where the target time period is any one of the preset time periods; and
determining the exposure probability of the to-be-displayed content based on the second browsing duration and first browsing duration corresponding to the target time period.

Specifically, the determining the exposure probability of the to-be-displayed content based on the second browsing duration and first browsing duration corresponding to the target time period may include:
determining, based on the current browsing time and the second browsing duration, an initial browsing time corresponding to the user terminal and a preset browsing time corresponding to the to-be-displayed content; and
determining the exposure probability of the to-be-displayed content based on the initial browsing time, the preset browsing time, and the first browsing duration corresponding to the target time period.

In another possible implementation, the user behavior data includes operation behavior data, and the determining an exposure probability of the to-be-displayed content based on the user behavior data may include:
determining an operation mode corresponding to the operation behavior data and a display mode corresponding to the to-be-displayed content; and
determining the exposure probability of the to-be-displayed content based on the operation mode and the display mode.

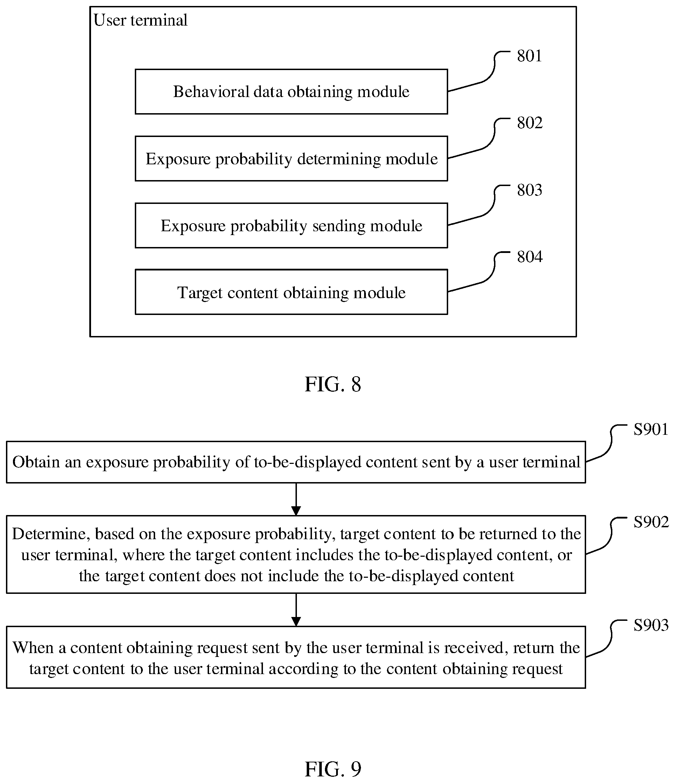

Corresponding to the content obtaining method in the foregoing embodiment, FIG. 8 is a block diagram of a structure a user terminal according to an embodiment of this application. For ease of description, only a part related to this embodiment of this application is shown.

With reference to FIG. 8, the user terminal may include:
a behavior data obtaining module 801, configured to obtain user behavior data corresponding to the user terminal and to-be-displayed content on the user terminal;
an exposure probability determining module 802, configured to determine an exposure probability of the to-be-displayed content based on the user behavior data;
an exposure probability sending module 803, configured to send the exposure probability to a content server; and
a target content obtaining module 804, configured to receive target content fed back by the content server, where the target content is determined based on the exposure probability, and the target content is triggered by the content server after the content server receives a content obtaining request sent by the user terminal.

In a possible implementation, the user terminal may further include:
a historical behavior data obtaining module, configured to obtain historical user behavior data corresponding to the user terminal; and
a first browsing duration determining module, configured to determine, based on the historical user behavior data, first browsing duration corresponding to the user terminal in each preset time period.

For example, the user behavior data includes a current browsing time and second browsing duration, and the exposure probability determining module 802 may include:
a target time period determining unit, configured to determine, based on the current browsing time, a target time period to which the user terminal currently belongs, where the target time period is any one of the preset time periods; and
a first exposure probability determining unit, configured to determine the exposure probability of the to-be-displayed content based on the second browsing duration and first browsing duration corresponding to the target time period.

Specifically, the first exposure probability determining unit may include:
a browsing time determining subunit, configured to determine, based on the current browsing time and the second browsing duration, an initial browsing time corresponding to the user terminal and a preset browsing time corresponding to the to-be-displayed content; and
a first exposure probability determining subunit, configured to determine the exposure probability of the to-be-displayed content based on the initial browsing time, the preset browsing time, and the first browsing duration corresponding to the target time period.

For example, the user behavior data includes operation behavior data, and the exposure probability determining module 802 may further include:
a mode determining unit, configured to determine an operation mode corresponding to the operation behavior data and a display mode corresponding to the to-be-displayed content; and
a second exposure probability determining unit, configured to determine the exposure probability of the to-be-displayed content based on the operation mode and the display mode.

Optionally, the user terminal may further include:
a request sending module, configured to obtain an exposure status of current content on the user terminal, and send the content obtaining request to the content server based on the exposure status.

The following describes, from a perspective of a content server, a content obtaining method provided in an embodiment of this application. FIG. 9 is a schematic flowchart of a content obtaining method according to an embodiment of this application. As an example rather than a limitation, the content obtaining method is applied to a content server. The content obtaining method may include the following steps.

S901: Obtain an exposure probability of to-be-displayed content sent by a user terminal.

It should be understood that, after determining an exposure probability of any to-be-displayed content, the user terminal may send the exposure probability to the content server, or may send the exposure probability to the content server when sending a content obtaining request to the content server, so that the content server may obtain the exposure probability of the to-be-displayed content that is sent by the user terminal.

S902: Determine, based on the exposure probability, target content to be pushed to the user terminal, where the target content includes the to-be-displayed content, or the target content does not include the to-be-displayed content.

Herein, for specific descriptions of S902, refer to S604 in the embodiment corresponding to FIG. 6. For brevity, details are not described herein again.

S903: When a content obtaining request sent by the user terminal is received, push the target content to the user terminal according to the content obtaining request.

Herein, for specific descriptions of S903, refer to S606 in the embodiment corresponding to FIG. 6. For brevity, details are not described herein again.

In a possible implementation, the determining, based on the exposure probability, target content to be returned to the user terminal may include:
if the exposure probability is less than a preset threshold, determining first preset content as the target content to be returned to the user terminal, where the first preset content includes the to-be-displayed content; or
if the exposure probability is greater than or equal to the preset threshold, determining second preset content as the target content to be returned to the user terminal, where the second preset content does not include the to-be-displayed content.

In another possible implementation, the determining, based on the exposure probability, target content to be returned to the user terminal may include:
obtaining currently displayed content on the user terminal; and
determining, based on the exposure probability and the currently displayed content, the target content to be returned to the user terminal.

For example, when a plurality of pieces of target content are included, the returning the target content to the user terminal according to the content obtaining request may include:
obtaining a display order corresponding to each piece of target content and a current operation mode corresponding to the user terminal;
determining a display manner of the target content based on the current operation mode and the display order; and
returning each piece of target content to the user terminal based on the display manner and according to the content obtaining request.

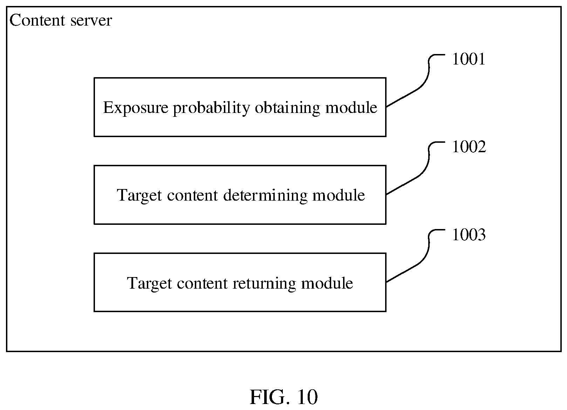

Corresponding to the content obtaining method in the foregoing embodiment, FIG. 10 is a block diagram of a structure a content server according to an embodiment of this application. For ease of description, only a part related to this embodiment of this application is shown.

With reference to FIG. 10, the content server may include:
an exposure probability obtaining module 1001, configured to obtain an exposure probability of to-be-displayed content sent by a user terminal;
a target content determining module 1002, configured to determine, based on the exposure probability, target content to be returned to the user terminal, where the target content includes the to-be-displayed content, or the target content does not include the to-be-displayed content; and
a target content returning module 1003, configured to: when a content obtaining request sent by the user terminal is received, return the target content to the user terminal according to the content obtaining request.

In a possible implementation, the target content determining module 1002 may include:
a first determining unit, configured to: if the exposure probability is less than a preset threshold, determine first preset content as the target content to be returned to the user terminal, where the first preset content includes the to-be-displayed content; and
a second determining unit, configured to: if the exposure probability is greater than or equal to the preset threshold, determine second preset content as the target content to be returned to the user terminal, where the second preset content does not include the to-be-displayed content.

In another possible implementation, the target content determining module 1002 may include:
a current content obtaining unit, configured to obtain currently displayed content on the user terminal; and
a third determining unit, configured to determine, based on the exposure probability and the currently displayed content, the target content to be returned to the user terminal.

For example, when a plurality of pieces of target content are included, the target content returning module 1003 may include:
a display order obtaining unit, configured to obtain a display order corresponding to each piece of target content and a current operation mode corresponding to the user terminal;
a display manner determining unit, configured to determine a display manner of the target content based on the current operation mode and the display order; and
a target content returning unit, configured to return each piece of target content to the user terminal based on the display manner and according to the content obtaining request.

It should be noted that content such as information exchange and an execution process between the foregoing apparatuses/units is based on a same concept as that in the method embodiments of this application. For specific functions and technical effects of the content, refer to the method embodiments. Details are not described herein again.

It may be clearly understood by a person skilled in the art that, for the purpose of convenient and brief description, division of the foregoing functional units and modules is used as an example for illustration. In an actual application, the foregoing functions can be allocated to different functional units and modules and implemented based on a requirement, that is, an inner structure of the apparatus is divided into different functional units and modules to implement all or some of the functions described above. Functional units and modules in the embodiments may be integrated into one processing unit, or each of the units may exist alone physically, or two or more units may be integrated into one unit. The integrated unit may be implemented in a form of hardware, or may be implemented in a form of a software functional unit. In addition, specific names of the functional units and modules are merely provided for distinguishing between the units and modules, but are not intended to limit the protection scope of this application. For a specific working process of the units and modules in the foregoing system, refer to a corresponding process in the foregoing method embodiments. Details are not described herein again.

An embodiment of this application further provides a computer-readable storage medium. The computer-readable storage medium stores a computer program. When the computer program is executed by a processor, the steps in the foregoing method embodiments can be implemented.

An embodiment of this application provides a computer program product. When the computer program product is run on a user terminal or a content server, the user terminal or the content server is enabled to implement the steps in the foregoing method embodiments when executing the computer program product.

When the integrated unit is implemented in the form of a software functional unit and sold or used as an independent product, the integrated unit may be stored in a computer-readable storage medium. Based on such an understanding, in this application, all or some of the procedures of the methods in the foregoing embodiments may be implemented by a computer program instructing related hardware. The computer program may be stored in a computer-readable storage medium. When the computer program is executed by a processor, the steps in the foregoing method embodiments can be implemented. The computer program includes computer program code, and the computer program code may be in a source code form, an object code form, an executable file form, some intermediate forms, or the like. The computer-readable storage medium may include at least any entity or apparatus that can carry the computer program code to an apparatus/terminal device, a recording medium, a computer memory, a read-only memory (ROM, Read-Only Memory), a random access memory (RAM, Random Access Memory), an electrical carrier signal, a telecommunications signal, and a software distribution medium, for example, a USB flash drive, a removable hard disk, a magnetic disk, or an optical disk. In some jurisdictions, according to legislation and patent practice, a computer-readable storage medium cannot be an electrical carrier signal or a telecommunications signal.

In the foregoing embodiments, the descriptions of the embodiments have respective focuses. For a part that is not described in detail in an embodiment, refer to related descriptions in other embodiments.

A person of ordinary skill in the art may be aware that, in combination with the examples described in the embodiments disclosed in this specification, units and algorithm steps may be implemented by electronic hardware or a combination of computer software and electronic hardware. Whether the functions are implemented by hardware or software depends on particular applications and design constraints of the technical solutions. A person skilled in the art may use different methods to implement the described functions for each particular application, but it should not be considered that the implementation goes beyond the scope of this application.

In the embodiments provided in this application, it should be understood that the disclosed user terminal, content server, and method may be implemented in other manners. For example, the described user terminal and content server embodiments are merely examples. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected depending on actual requirements to achieve the objectives of the solutions in the embodiments.

The foregoing embodiments are merely intended to describe the technical solutions of this application, but not to limit this application. Although this application is described in detail with reference to the foregoing embodiments, a person of ordinary skill in the art should understand that they may still make modifications to the technical solutions described in the foregoing embodiments, without departing from the scope of the technical solutions of the embodiments of this application.

## Claims

1. A content obtaining method, applied to a user terminal, wherein the content obtaining method comprises:
obtaining user behavioral data corresponding to the user terminal and to-be-displayed content on the user terminal (S601, S701), wherein the to-be-displayed content on the user terminal is content that is returned by a content server to the user terminal in response to a first content obtaining request of the user terminal but has not been displayed on a display screen of the user terminal, wherein the user behavioral data includes browsing behavior data and operation behavior data, the browsing behavior data includes a browsing time and browsing duration, and the operation behavior data includes data corresponding to a swipe-up scrolling behavior, data corresponding to a swipe-down refreshing behavior, and data corresponding to a tap-to-switch behavior;
determining an exposure probability of the to-be-displayed content based on the user behavioral data (S602, S702);
sending the exposure probability to the content server (S603, S703); and
receiving target content fed back by the content server (S606, S704), wherein the target content is determined based on the exposure probability, and the target content is triggered by the content server after the content server receives a second content obtaining request sent by the user terminal,
wherein the target content comprises the to-be-displayed content if the exposure probability is less than a preset threshold;
the target content does not comprise the to-be-displayed content if the exposure probability is greater than or equal to the preset threshold.

2. The content obtaining method according to claim 1, wherein before the determining an exposure probability of the to-be-displayed content based on the user behavioral data (S602, S702), the method comprises:
obtaining historical user behavioral data corresponding to the user terminal; and
determining, based on the historical user behavioral data, first browsing duration corresponding to the user terminal in each preset time period.

3. The content obtaining method according to claim 2, wherein the user behavioral data comprises a current browsing time and second browsing duration, and the determining an exposure probability of the to-be-displayed content based on the user behavioral data (S602, S702) comprises:
determining, based on the current browsing time, a target time period to which the user terminal currently belongs, wherein the target time period is any one of the preset time periods; and
determining the exposure probability of the to-be-displayed content based on the second browsing duration and first browsing duration corresponding to the target time period.

4. The content obtaining method according to claim 3, wherein the determining the exposure probability of the to-be-displayed content based on the second browsing duration and first browsing duration corresponding to the target time period comprises:
determining, based on the current browsing time and the second browsing duration, an initial browsing time corresponding to the user terminal and a preset browsing time corresponding to the to-be-displayed content; and
determining the exposure probability of the to-be-displayed content based on the initial browsing time, the preset browsing time, and the first browsing duration corresponding to the target time period.

5. The content obtaining method according to claim 1, wherein the determining an exposure probability of the to-be-displayed content based on the user behavioral data (S602, S702) comprises:
determining an operation mode corresponding to the operation behavioral data and a display mode corresponding to the to-be-displayed content; and
determining the exposure probability of the to-be-displayed content based on the operation mode and the display mode,
wherein the operation mode includes a swipe-up mode and a swipe-down mode, and
wherein the display mode corresponding to the to-be-displayed content is a mode in which content is displayed on the user terminal, and is a swipe-up scrolling mode or a swipe-down refreshing mode.

6. The content obtaining method according to any one of claims 1 to 5, wherein before the receiving target content fed back by the content server (S606, S704), the method comprises:
obtaining an exposure status of current content on the user terminal, and sending the second content obtaining request to the content server based on the exposure status.

7. A user terminal, comprising:
a behavioral data obtaining module (801), configured to obtain user behavioral data corresponding to the user terminal and to-be-displayed content on the user terminal, wherein the to-be-displayed content on the user terminal is content that is returned by a content server to the user terminal in response to a first content obtaining request of the user terminal but has not been displayed on a display screen of the user terminal, wherein the user behavioral data includes browsing behavior data and operation behavior data, the browsing behavior data includes a browsing time and browsing duration, and the operation behavior data includes data corresponding to a swipe-up scrolling behavior, data corresponding to a swipe-down refreshing behavior, and data corresponding to a tap-to-switch behavior;
an exposure probability determining module (802), configured to determine an exposure probability of the to-be-displayed content based on the user behavioral data;
an exposure probability sending module (803), configured to send the exposure probability to a content server; and
a target content obtaining module (804), configured to receive target content fed back by the content server, wherein the target content is determined based on the exposure probability, and the target content is triggered by the content server after the content server receives a second content obtaining request sent by the user terminal,
wherein the target content comprises the to-be-displayed content if the exposure probability is less than a preset threshold;
the target content does not comprise the to-be-displayed content if the exposure probability is greater than or equal to the preset threshold.

8. The user terminal according to claim 7, wherein the user terminal further comprises:
a historical behavioral data obtaining module, configured to obtain historical user behavioral data corresponding to the user terminal; and
a first browsing duration determining module, configured to determine, based on the historical user behavioral data, first browsing duration corresponding to the user terminal in each preset time period.

9. The user terminal according to claim 8, wherein the user behavioral data comprises a current browsing time and second browsing duration, and the exposure probability determining module (802) comprises:
a target time period determining unit, configured to determine, based on the current browsing time, a target time period to which the user terminal currently belongs, wherein the target time period is any one of the preset time periods; and
a first exposure probability determining unit, configured to determine the exposure probability of the to-be-displayed content based on the second browsing duration and first browsing duration corresponding to the target time period.

10. The user terminal according to claim 9, wherein the first exposure probability determining unit comprises:
a browsing time determining subunit, configured to determine, based on the current browsing time and the second browsing duration, an initial browsing time corresponding to the user terminal and a preset browsing time corresponding to the to-be-displayed content; and
a first exposure probability determining subunit, configured to determine the exposure probability of the to-be-displayed content based on the initial browsing time, the preset browsing time, and the first browsing duration corresponding to the target time period.

11. The user terminal according to claim 7, wherein the exposure probability determining module (802) comprises:
a mode determining unit, configured to determine an operation mode corresponding to the operation behavioral data and a display mode corresponding to the to-be-displayed content; and
a second exposure probability determining unit, configured to determine the exposure probability of the to-be-displayed content based on the operation mode and the display mode,
wherein the operation mode includes a swipe-up mode and a swipe-down mode, and
wherein the display mode corresponding to the to-be-displayed content is a mode in which content is displayed on the user terminal, and is a swipe-up scrolling mode or a swipe-down refreshing mode.

12. The user terminal according to any one of claims 7 to 11, wherein the user terminal further comprises:
a request sending module, configured to obtain an exposure status of current content on the user terminal, and send the second content obtaining request to the content server based on the exposure status.

13. A computer-readable storage medium, wherein the computer-readable storage medium stores a computer program, and when the computer program is executed by a processor, the content obtaining method according to any one of claims 1 to 5 is implemented.

## Patentansprüche

1. Verfahren zum Erhalten von Inhalt, das auf ein Benutzerendgerät angewendet wird, wobei das Verfahren zum Erhalten von Inhalt umfasst: Erhalten von Benutzerverhaltensdaten, die dem Benutzerendgerät entsprechen, und auf dem Benutzerendgerät anzuzeigendem Inhalt (S601, S701), wobei der auf dem Benutzerendgerät anzuzeigende Inhalt Inhalt, der durch einen Inhaltsserver als Antwort auf eine erste Anforderung zum Erhalten des Inhalts des Benutzerendgeräts an das Benutzerendgerät zurückgegeben wird, aber noch nicht auf einem Anzeigebildschirm des Benutzerendgeräts angezeigt wurde, ist, wobei die Benutzerverhaltensdaten Browsing-Verhaltensdaten und Betriebsverhaltensdaten einschließen, wobei die Browsing-Verhaltensdaten eine Browsing-Zeit und eine Browsing-Dauer einschließen, und die Betriebsverhaltensdaten Daten, die einem Aufwärtswisch-Scrollverhalten entsprechen, Daten, die einem Abwärtswisch-Aktualisierungsverhalten entsprechen, und Daten, die einem Antipp-zum-Umschaltverhalten entsprechen, einschließen; Bestimmen einer Expositionswahrscheinlichkeit des anzuzeigenden Inhalts basierend auf den Benutzerverhaltensdaten (S602, S702);
Senden der Expositionswahrscheinlichkeit an den Inhaltsserver (S603, S703); und Empfangen von durch den Inhaltsserver zurückgemeldetem Zielinhalt (S606, S704), wobei der Zielinhalt basierend auf der Expositionswahrscheinlichkeit bestimmt wird und der Zielinhalt durch den Inhaltsserver ausgelöst wird, nachdem der Inhaltsserver eine zweite Anforderung zum Erhalten von Inhalt, die durch das Benutzerendgerät gesendet wird, empfangen hat,
wobei der Zielinhalt den anzuzeigenden Inhalt umfasst, falls die Expositionswahrscheinlichkeit kleiner als ein voreingestellter Schwellenwert ist;
der Zielinhalt den anzuzeigenden Inhalt nicht umfasst, falls die Expositionswahrscheinlichkeit größer als oder gleich dem voreingestellten Schwellenwert ist.

2. Verfahren zum Erhalten von Inhalt nach Anspruch 1, wobei vor dem Bestimmen einer Expositionswahrscheinlichkeit des anzuzeigenden Inhalts basierend auf den Benutzerverhaltensdaten (S602, S702) das Verfahren umfasst:
Erhalten historischer Benutzerverhaltensdaten, die dem Benutzerendgerät entsprechen; und
Bestimmen, basierend auf den historischen Benutzerverhaltensdaten, einer ersten Browsing-Dauer, die dem Benutzerendgerät in jeder voreingestellten Zeitspanne entspricht.

3. Verfahren zum Erhalten von Inhalten nach Anspruch 2, wobei die Benutzerverhaltensdaten eine aktuelle Browsing-Zeit und eine zweite Browsing-Dauer umfassen, und das Bestimmen einer Expositionswahrscheinlichkeit des anzuzeigenden Inhalts basierend auf den Benutzerverhaltensdaten (S602, S702) umfasst:
Bestimmen, basierend auf der aktuellen Browsing-Zeit, einer Zielzeitspanne, zu der das Benutzerendgerät aktuell gehört, wobei die Zielzeitspanne eine beliebige der voreingestellten Zeitspannen ist; und
Bestimmen der Expositionswahrscheinlichkeit des anzuzeigenden Inhalts basierend auf der zweiten Browsing-Dauer und der ersten Browsing-Dauer, die der Zielzeitspanne entsprechen.

4. Verfahren zum Erhalten von Inhalt nach Anspruch 3, wobei das Bestimmen der Expositionswahrscheinlichkeit des anzuzeigenden Inhalts basierend auf der zweiten Browsing-Dauer und der ersten Browsing-Dauer, die der Zielzeitspanne entspricht, umfasst:
Bestimmen, basierend auf der aktuellen Browsing-Zeit und der zweiten Browsing-Dauer, einer anfänglichen Browsing-Zeit, die dem Benutzerendgerät entspricht, und einer voreingestellten Browsing-Zeit, die dem anzuzeigenden Inhalt entspricht; und
Bestimmen der Expositionswahrscheinlichkeit des anzuzeigenden Inhalts basierend auf der anfänglichen Browsing-Zeit, der voreingestellten Browsing-Zeit und der ersten Browsing-Dauer, die der Zielzeitspanne entspricht.

5. Verfahren zum Erhalten von Inhalt nach Anspruch 1, wobei das Bestimmen einer Expositionswahrscheinlichkeit des anzuzeigenden Inhalts basierend auf den Benutzerverhaltensdaten (S602, S702) umfasst:
Bestimmen eines Betriebsmodus, der den Betriebsverhaltensdaten entspricht, und eines Anzeigemodus, der dem anzuzeigenden Inhalt entspricht; und
Bestimmen der Expositionswahrscheinlichkeit des anzuzeigenden Inhalts basierend auf dem Betriebsmodus und dem Anzeigemodus,
wobei der Betriebsmodus einen Aufwärtswischmodus und einen Abwärtswischmodus einschließt, und
wobei der Anzeigemodus, der dem anzuzeigenden Inhalt entspricht, ein Modus, in dem Inhalt auf dem Benutzerendgerät angezeigt wird, ist, und ein Aufwärtswisch-Scrollmodus oder ein Abwärtswisch-Aktualisierungsmodus ist.

6. Verfahren zum Erhalten von Inhalt nach einem der Ansprüche 1 bis 5, wobei vor dem Empfangen des durch den Inhaltsserver zurückgemeldeten Zielinhalts (S606, S704) das Verfahren umfasst:
Erhalten eines Expositionsstatus von aktuellem Inhalt auf dem Benutzerendgerät und Senden der zweiten Anforderung zum Erhalten von Inhalt an den Inhaltsserver basierend auf dem Expositionsstatus.

7. Benutzerendgerät, das umfasst:
ein Modul (801) zum Erhalten von Verhaltensdaten, das konfiguriert ist, um Benutzerverhaltensdaten, die dem Benutzerendgerät entsprechen, und auf dem Benutzerendgerät anzuzeigenden Inhalt zu erhalten, wobei der auf dem Benutzerendgerät anzuzeigende Inhalt Inhalt, der durch einen Inhaltsserver als Antwort auf eine erste Anforderung zum Erhalten des Inhalts des Benutzerendgeräts an das Benutzerendgerät zurückgegeben wird, aber noch nicht auf einem Anzeigebildschirm des Benutzerendgeräts angezeigt wurde, ist, wobei die Benutzerverhaltensdaten Browsing-Verhaltensdaten und Betriebsverhaltensdaten einschließen, wobei die Browsing-Verhaltensdaten eine Browsing-Zeit und eine Browsing-Dauer einschließen, und die Betriebsverhaltensdaten Daten, die einem Aufwärtswisch-Scrollverhalten entsprechen, Daten, die einem Abwärtswisch-Aktualisierungsverhalten entsprechen, und Daten, die einem Antipp-Umschaltverhalten entsprechen, einschließen;
ein Expositionswahrscheinlichkeitsbestimmungsmodul (802), das konfiguriert ist, um eine Expositionswahrscheinlichkeit des anzuzeigenden Inhalts basierend auf den Benutzerverhaltensdaten zu bestimmen;
ein Expositionswahrscheinlichkeitsendemodul (803), das konfiguriert ist, um die Expositionswahrscheinlichkeit an einen Inhaltsserver zu senden; und
ein Modul (804) zum Erhalten von Zielinhalt, das konfiguriert ist, um durch den Inhaltsserver zurückgemeldeten Zielinhalt zu empfangen, wobei der Zielinhalt basierend auf der Expositionswahrscheinlichkeit bestimmt wird, und der Zielinhalt durch den Inhaltsserver ausgelöst wird, nachdem der Inhaltsserver eine zweite Anforderung zum Erhalten von Inhalt, die durch das Benutzerendgerät gesendet wird, empfangen hat, wobei der Zielinhalt den anzuzeigenden Inhalt umfasst, falls die Expositionswahrscheinlichkeit kleiner als ein voreingestellter Schwellenwert ist;
der Zielinhalt den anzuzeigenden Inhalt nicht umfasst, falls die Expositionswahrscheinlichkeit größer als oder gleich dem voreingestellten Schwellenwert ist.

8. Benutzerendgerät nach Anspruch 7, wobei das Benutzerendgerät ferner umfasst:
ein Modul zum Erhalten historischer Verhaltensdaten, das konfiguriert ist, um historische Benutzerverhaltensdaten, die dem Benutzerendgerät entsprechen, zu erhalten; und
ein erstes Browsing-Dauerbestimmungsmodul, das konfiguriert ist, um basierend auf den historischen Benutzerverhaltensdaten eine erste Browsing-Dauer, die dem Benutzerendgerät in jeder voreingestellten Zeitspanne entspricht, zu bestimmen.

9. Benutzerendgerät nach Anspruch 8, wobei die Benutzerverhaltensdaten eine aktuelle Browsing-Zeit und eine zweite Browsing-Dauer umfassen, und das Expositionswahrscheinlichkeitsbestimmungsmodul (802) umfasst:
eine Zielzeitspannenbestimmungseinheit, die konfiguriert ist, um basierend auf der aktuellen Browsing-Zeit eine Zielzeitspanne, zu der das Benutzerendgerät aktuell gehört, zu bestimmen, wobei die Zielzeitspanne eine beliebige der voreingestellten Zeitspannen ist; und
eine erste Expositionswahrscheinlichkeitsbestimmungseinheit, die konfiguriert ist, um die Expositionswahrscheinlichkeit des anzuzeigenden Inhalts basierend auf der zweiten Browsing-Dauer und der ersten Browsing-Dauer, die der Zielzeitspanne entspricht, zu bestimmen.

10. Benutzerendgerät nach Anspruch 9, wobei die erste
Expositionswahrscheinlichkeitsbestimmungseinheit umfasst:
eine Browsing-Zeitbestimmungsuntereinheit, die konfiguriert ist, um basierend auf der aktuellen Browsing-Zeit und der zweiten Browsing-Dauer eine anfängliche Browsing-Zeit, die dem Benutzerendgerät entspricht, und eine voreingestellte Browsing-Zeit, die dem anzuzeigenden Inhalt entspricht, zu bestimmen; und
eine erste Expositionswahrscheinlichkeitsbestimmungsuntereinheit die konfiguriert ist, um die Expositionswahrscheinlichkeit des anzuzeigenden Inhalts basierend auf der anfänglichen Browsing-Zeit, der voreingestellten Browsing-Zeit und der ersten Browsing-Dauer, die der Zielzeitspanne entspricht, zu bestimmen.

11. Benutzerendgerät nach Anspruch 7, wobei das
Expositionswahrscheinlichkeitsbestimmungsmodul (802) umfasst:
eine Modusbestimmungseinheit, die konfiguriert ist, um einen Betriebsmodus, der den Betriebsverhaltensdaten entspricht, und einen Anzeigemodus, der dem anzuzeigenden Inhalt entspricht, zu bestimmen; und
eine zweite Expositionswahrscheinlichkeitsbestimmungseinheit, die konfiguriert ist, um die Expositionswahrscheinlichkeit des anzuzeigenden Inhalts basierend auf dem Arbeitsmodus und dem Anzeigemodus zu bestimmen,
wobei der Betriebsmodus einen Aufwärtswischmodus und einen Abwärtswischmodus einschließt, und
wobei der Anzeigemodus, der dem anzuzeigenden Inhalt entspricht, ein Modus, in dem Inhalt auf dem Benutzerendgerät angezeigt wird, ist, und ein Aufwärtswisch-Scrollmodus oder ein Abwärtswisch-Aktualisierungsmodus ist.

12. Benutzerendgerät nach einem der Ansprüche 7 bis 11, wobei das Benutzerendgerät ferner umfasst:
ein Anforderungssendemodul, das konfiguriert ist, um einen Expositionsstatus von aktuellem Inhalt auf dem Benutzerendgerät zu erhalten und basierend auf dem Expositionsstatus die zweite Anforderung zum Erhalten von Inhalt an den Inhaltsserver zu senden.

13. Computerlesbares Speichermedium, wobei das computerlesbare Speichermedium ein Computerprogramm speichert, und wenn das Computerprogramm durch einen Prozessor ausgeführt wird, das Verfahren zum Erhalten von Inhalt nach einem der Ansprüche 1 bis 5 implementiert wird.

## Revendications

1. Procédé d'obtention de contenu, appliqué à un terminal utilisateur, dans lequel le procédé d'obtention de contenu comprend : l'obtention de données de comportement d'utilisateur correspondant au terminal utilisateur et de contenu à afficher sur le terminal utilisateur (S601, S701), dans lequel le contenu à afficher sur le terminal utilisateur est un contenu qui est renvoyé par un serveur de contenu au terminal utilisateur en réponse à une première demande d'obtention de contenu du terminal utilisateur mais qui n'a pas été affiché sur un écran d'affichage du terminal utilisateur, dans lequel les données de comportement d'utilisateur comportent des données de comportement de survol et des données de comportement d'opération, les données de comportement de survol comportent un temps de survol et une durée de survol, et les données de comportement d'opération comportent des données correspondant à un comportement de défilement rapide vers le haut, des données correspondant à un comportement d'actualisation de balayage vers le bas, et des données correspondant à un comportement d'appui pour commuter ;
la détermination d'une probabilité d'exposition du contenu à afficher en fonction des données de comportement d'utilisateur (S602, S702) ;
l'envoi de la probabilité d'exposition au serveur de contenu (S603, S703) ; et
la réception d'un contenu cible renvoyé par le serveur de contenu (S606, S704), dans lequel le contenu cible est déterminé en fonction de la probabilité d'exposition, et le contenu cible est déclenché par le serveur de contenu après la réception par le serveur de contenu d'une seconde demande d'obtention de contenu envoyée par le terminal utilisateur,
dans lequel le contenu cible comprend le contenu à afficher si la probabilité d'exposition est inférieure à un seuil prédéfini ;
le contenu cible ne comprend pas le contenu à afficher si la probabilité d'exposition est supérieure ou égale au seuil prédéfini.

2. Procédé d'obtention de contenu selon la revendication 1, dans lequel, avant la détermination d'une probabilité d'exposition du contenu à afficher en fonction des données de comportement d'utilisateur (S602, S702), le procédé comprend :
l'obtention de données de comportement d'utilisateur historiques correspondant au terminal utilisateur ; et
la détermination, en fonction des données de comportement d'utilisateur historiques, d'une première durée de survol correspondant au terminal utilisateur dans chaque période de temps prédéfinie.

3. Procédé d'obtention de contenu selon la revendication 2, dans lequel les données de comportement d'utilisateur comprennent un temps de survol actuel et une seconde durée de survol, et la détermination d'une probabilité d'exposition du contenu à afficher en fonction des données de comportement d'utilisateur (S602, S702) comprend :
la détermination, en fonction du temps de survol actuel, d'une période de temps cible à laquelle le terminal utilisateur appartient actuellement, dans lequel la période de temps cible est l'une quelconque des périodes de temps prédéfinies ; et
la détermination de la probabilité d'exposition du contenu à afficher en fonction de la seconde durée de survol et de la première durée de survol correspondant à la période de temps cible.

4. Procédé d'obtention de contenu selon la revendication 3, dans lequel la détermination de la probabilité d'exposition du contenu à afficher en fonction de la seconde durée de survol et de la première durée de survol correspondant à la période de temps cible comprend :
la détermination, en fonction du temps de survol actuel et de la seconde durée de survol, d'un temps de survol initial correspondant au terminal utilisateur et d'un temps de survol prédéfini correspondant au contenu à afficher ; et
la détermination de la probabilité d'exposition du contenu à afficher en fonction du temps de survol initial, du temps de survol prédéfini et de la première durée de survol correspondant à la période de temps cible.

5. Procédé d'obtention de contenu selon la revendication 1, dans lequel la détermination d'une probabilité d'exposition du contenu à afficher en fonction des données de comportement d'utilisateur (S602, S702) comprend :
la détermination d'un mode d'opération correspondant aux données de comportement d'opération et d'un mode d'affichage correspondant au contenu à afficher ; et
la détermination de la probabilité d'exposition du contenu à afficher en fonction du mode d'opération et du mode d'affichage,
dans lequel le mode d'opération comporte un mode de balayage vers le haut et un mode de balayage vers le bas, et
dans lequel le mode d'affichage correspondant au contenu à afficher est un mode dans lequel un contenu est affiché sur le terminal utilisateur, et est un mode de défilement de balayage vers le haut ou un mode de rafraîchissement de balayage vers le bas.

6. Procédé d'obtention de contenu selon l'une quelconque des revendications 1 à 5, dans lequel, avant la réception du contenu cible renvoyé par le serveur de contenu (S606, S704), le procédé comprend :
l'obtention d'un état d'exposition de contenu actuel sur le terminal utilisateur, et
l'envoi de la seconde demande d'obtention de contenu au serveur de contenu en fonction de l'état d'exposition.

7. Terminal utilisateur, comprenant :
un module d'obtention de données de comportement (801), configuré pour obtenir des données de comportement d'utilisateur correspondant au terminal utilisateur et un contenu à afficher sur le terminal utilisateur, dans lequel le contenu à afficher sur le terminal utilisateur est un contenu qui est retourné par un serveur de contenu au terminal utilisateur en réponse à une première demande d'obtention de contenu du terminal utilisateur mais qui n'a pas été affiché sur un écran d'affichage du terminal utilisateur, dans lequel les données de comportement d'utilisateur comportent des données de comportement de survol et des données de comportement d'opération, les données de comportement de survol comportent un temps de survol et une durée de survol, et les données de comportement d'opération comportent des données correspondant à un comportement de défilement de balayage vers le haut, des données correspondant à un comportement d'actualisation de balayage vers le bas et des données correspondant à un comportement d'appui pour commuter ;
un module de détermination de probabilité d'exposition (802), configuré pour déterminer une probabilité d'exposition du contenu à afficher en fonction des données de comportement d'utilisateur ;
un module d'envoi de probabilité d'exposition (803), configuré pour envoyer la probabilité d'exposition à un serveur de contenu ; et
un module d'obtention de contenu cible (804), configuré pour recevoir un contenu cible renvoyé par le serveur de contenu, dans lequel le contenu cible est déterminé en fonction de la probabilité d'exposition, et le contenu cible est déclenché par le serveur de contenu après la réception par le serveur de contenu d'une seconde demande d'obtention de contenu envoyée par le terminal utilisateur,
dans lequel le contenu cible comprend le contenu à afficher si la probabilité d'exposition est inférieure à un seuil prédéfini ;
le contenu cible ne comprend pas le contenu à afficher si la probabilité d'exposition est supérieure ou égale au seuil prédéfini.

8. Terminal utilisateur selon la revendication 7, dans lequel le terminal utilisateur comprend en outre :
un module d'obtention de données de comportement historiques, configuré pour obtenir des données de comportement historiques correspondant au terminal utilisateur ; et
un module de détermination de première durée de survol, configuré pour déterminer, en fonction des données de comportement d'utilisateur historiques, une première durée de survol correspondant au terminal utilisateur dans chaque période de temps prédéfinie.

9. Terminal utilisateur selon la revendication 8, dans lequel les données de comportement d'utilisateur comprennent un temps de survol actuel et une seconde durée de survol, et le module de détermination de probabilité d'exposition (802) comprend :
une unité de détermination de période de temps cible, configurée pour déterminer, en fonction du temps de survol actuel, une période de temps cible à laquelle le terminal utilisateur appartient actuellement, dans lequel la période de temps cible est l'une quelconque des périodes de temps prédéfinies ; et
une première unité de détermination de probabilité d'exposition, configurée pour déterminer la probabilité d'exposition du contenu à afficher en fonction de la seconde durée de survol et de la première durée de survol correspondant à la période de temps cible.

10. Terminal utilisateur selon la revendication 9, dans lequel la première unité de détermination de probabilité d'exposition comprend :
une sous-unité de détermination de temps de survol, configurée pour déterminer, en fonction du temps de survol actuel et de la seconde durée de survol, un temps de survol initial correspondant au terminal utilisateur et un temps de survol prédéfini correspondant au contenu à afficher ; et
une première sous-unité de détermination de probabilité d'exposition, configurée pour déterminer la probabilité d'exposition du contenu à afficher en fonction du temps de survol initial, du temps de survol prédéfini et de la première durée de survol correspondant à la période de temps cible.

11. Terminal utilisateur selon la revendication 7, dans lequel le module de détermination de probabilité d'exposition (802) comprend :
une unité de détermination de mode, configurée pour déterminer un mode d'opération correspondant aux données de comportement d'opération et un mode d'affichage correspondant au contenu à afficher ; et
une seconde unité de détermination de probabilité d'exposition, configurée pour déterminer la probabilité d'exposition du contenu à afficher en fonction du mode d'opération et du mode d'affichage,
dans lequel le mode d'opération comporte un mode de balayage vers le haut et un mode de balayage vers le bas, et
dans lequel le mode d'affichage correspondant au contenu à afficher est un mode dans lequel un contenu est affiché sur le terminal utilisateur, et est un mode de défilement de balayage vers le haut ou un mode de rafraîchissement de balayage vers le bas.

12. Terminal utilisateur selon l'une quelconque des revendications 7 à 11, dans lequel le terminal utilisateur comprend en outre :
un module d'envoi de demande, configuré pour obtenir un état d'exposition d'un contenu actuel sur le terminal utilisateur, et envoyer la seconde demande d'obtention de contenu au serveur de contenu en fonction de l'état d'exposition.

13. Support de stockage lisible par ordinateur, dans lequel le support de stockage lisible par ordinateur stocke un programme informatique, et lorsque le programme informatique est exécuté par un processeur, le procédé d'obtention de contenu selon l'une quelconque des revendications 1 à 5 est mis en œuvre.
